(19) Europäisches Patentamt
European Patent Office
Office européen des brevets

(11) **EP 3 120 709 A1**

(12) **EUROPEAN PATENT APPLICATION**

(43) Date of publication:
**25.01.2017 Bulletin 2017/04**

(21) Application number: **16183927.9**

(22) Date of filing: **20.05.2010**

(51) Int Cl.:
*A23K 10/20* (2016.01)        *A23K 10/30* (2016.01)
*A23K 40/30* (2016.01)        *A23K 20/10* (2016.01)
*A23K 50/42* (2016.01)        *A23K 20/174* (2016.01)
*A23K 20/147* (2016.01)

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **28.05.2009 US 181702 P**

(62) Document number(s) of the earlier application(s) in accordance with Art. 76 EPC:
**10732513.6 / 2 434 908**

(71) Applicant: **IAMS Europe B.V.**
**7742 PB Coevorden (NL)**

(72) Inventors:
• SUNVOLD, Gregory, Dean
  Lewisburg, OH 45338 (US)
• CORRIGAN, Patrick, Joseph
  Glendale, OH 45246 (US)

(74) Representative: **Schiweck, Weinzierl & Koch**
**European Patent Attorneys**
**Landsberger Straße 98**
**80339 München (DE)**

Remarks:
This application was filed on 12-08-2016 as a divisional application to the application mentioned under INID code 62.

(54) **PET FOOD IN THE FORM OF A COATED KIBBLE**

(57)    A pet food in the form of a coated kibble wherein the coated kibble is made of a core and a coating. The core can be extruded and can have a moisture, or water, content less than 12%. The core can contain a coating. The coating can have a protein component at from 50% to 95% of the coating and a binder component at from 5% to 50% of the pet coating. In one embodiment a double coating is provided including a first coating and a second coating including a fat component.

Fig. 1

**Description**

**FIELD**

The present invention relates to the field of pet food. The present invention more particularly, but not exclusively, relates to pet food in the form of a coated kibble that increases animal preference.

**BACKGROUND**

Increasing the animal preference of pet food, particularly pet food in the form of dry kibbles, is a never ending goal of pet food manufacturers. Dry kibbled pet food, such as dog and cat foods, are dried, ready-to-eat pet food products. The kibbles may be formed by an extrusion process where the kibble raw materials are extruded under heat and pressure to form a pelletized kibble.

Pet food in the form of these kibbles presents its own challenges because of its inherent form - that of a dry kibble. Thus, kibbles inherently are difficult to make palatable because they are required to be in a dry form. The implication is that palatant costs could be avoided, or at least reduced, and product acceptance improved by leveraging existing ingredients normally located in the core kibble to the surface. However, the technical understanding of delivering improved product acceptance, or animal preference, of animal food by leveraging existing ingredients, such as core or internal ingredients, onto the surface of the kibble core, is not readily understood.

Another advantage to overcoming the technical challenge of applying core ingredients to the surface is that certain other ingredients, such as stability sensitive ingredients, can be further stabilized, such as improving vitamin retention or delivering Probiotic microorganisms.

Thus, in one embodiment, a pet food in the form of a kibble that has an increased animal preference is desired. Disclosed herein are multiple embodiments, at least one of which increases the animal preference of a kibble. In at least one way, it integrates the food preference of animals to enable otherwise core ingredients to be placed externally through the aid of the binder. In one way, the animal preference of the pet food can be substantially impacted.

SUMMARY

A pet food comprising an animal preference enhancing amount of a fat band is disclosed in one embodiment. In some embodiments, the fat band has a value greater than or equal to 3.900 or a value greater than or equal to 4.000. The pet food can comprise a kibble and can be a coated kibble and can be a nutritionally balanced kibble.

A container of pet food is also disclosed in one embodiment. The pet food can comprise a plurality of kibbles. The kibbles can have an animal preference enhancing amount of a fat band. In another embodiment, the container of pet food can have a first kibble type and a second kibble type, wherein the first kibble type can be a kibble that has an animal preference enhancing amount of a fat band, and the second kibble type can be a kibble that has a different amount of fat band than the first kibble type.

**BRIEF DESCRIPTION OF THE DRAWINGS**

FIG 1 depicts one embodiment of a kibble in the form of a coating on a core.
FIG 2 shows a comparison of total aldehydes.
FIG 3 shows a comparison of an oxygen bomb test.
FIG 4 provides a fat analysis comparison.
FIG 5 provides a fat analysis comparison.
FIG 6 provides a fat analysis comparison.
FIG 7 provides a fat analysis comparison.
FIG 8 provides a fat analysis comparison.
FIG 9 provides a fat analysis comparison.
FIG 10 provides the results of an aroma characterization.
FIG 11 provides the results of an aroma characterization.
FIG 12 provides the results of an aroma characterization.
FIG 13 provides the results of a vitamin loss comparison.
FIG 14 provides the results of a vitamin loss comparison.

## DETAILED DESCRIPTION

### Definitions

As used herein, the articles including "the", "a", and "an", when used in a claim or in the specification, are understood to mean one or more of what is claimed or described.

As used herein, the terms "include", "includes", and "including" are meant to be non-limiting.

As used herein, the term "plurality" means more than one.

As used herein, the term "kibble" includes a particulate pellet like component of animal feeds, such as dog and cat feeds, typically having a moisture, or water, content of less than 12% by weight. Kibbles may range in texture from hard to soft. Kibbles may range in internal structure from expanded to dense. Kibbles may be formed by an extrusion process. In non-limiting examples, a kibble can be formed from a core and a coating to form a kibble that is coated, also called a coated kibble. It should be understood that when the term "kibble" is used, it can refer to an uncoated kibble or a coated kibble.

As used herein, the terms "animal" or "pet" mean a domestic animal including, but not limited to domestic dogs, cats, horses, cows, ferrets, rabbits, pigs, rats, mice, gerbils, hamsters, horses, and the like. Domestic dogs and cats are particular examples of pets.

As used herein, the terms "animal feed", "animal feed compositions", "animal feed kibble", "pet food", or "pet food composition" all mean a composition intended for ingestion by a pet. Pet foods may include, without limitation, nutritionally balanced compositions suitable for daily feed, such as kibbles, as well as supplements and/or treats, which may or may not be nutritionally balanced.

As used herein, the term "nutritionally balanced" means that the composition, such as pet food, has known required nutrients to sustain life in proper amounts and proportion based on recommendations of recognized authorities, including governmental agencies, such as, but not limited to, Unites States Food and Drug Administration's Center for Veterinarian Medicine, the American Feed Control Officials Incorporated, in the field of pet nutrition, except for the additional need for water.

As used herein, the terms "Probiotic", "Probiotic component", "Probiotic ingredient", or "Probiotic organism" mean bacteria or other microorganisms, either viable or dead, their constituents such as proteins or carbohydrates, or purified fractions of bacterial ferments, including those in the dormant state and spores, that are capable of promoting mammalian health by preserving and/or promoting the natural microflora in the GI tract and reinforcing the normal controls on aberrant immune responses.

As used herein, the term "core", or "core matrix", means the particulate pellet of a kibble and is typically formed from a core matrix of ingredients and has a moisture, or water, content of less than 12% by weight. The particulate pellet may be coated to form a coating on a core, which may be a coated kibble. The core may be without a coating or may be with a partial coating. In an embodiment without a coating, the particulate pellet may comprise the entire kibble. Cores can comprise farinaceous material, proteinaceous material, and mixtures and combinations thereof. In one embodiment, the core can comprise a core matrix of protein, carbohydrate, and fat.

As used herein, the term "coating" means a partial or complete covering, typically on a core, that covers at least a portion of a surface, for example a surface of a core. In one example, a core may be partially covered with a coating such that only part of the core is covered, and part of the core is not covered and is thus exposed. In another example, the core may be completely covered with a coating such that the entire core is covered and thus not exposed. Therefore, a coating may cover from a negligible amount up to the entire surface. A coating can also be coated onto other coatings such that a layering of coatings can be present. For example, a core can be completed coated with coating A, and coating A can be completely coated with coating B, such that coating A and coating B each form a layer.

As used herein, the term "macronutrient" means a source, or sources, of protein, fat, carbohydrate, and/or combinations and/or mixtures thereof.

As used herein, the term "extrude" means an animal feed that has been processed by, such as by being sent through, an extruder. In one embodiment of extrusion, kibbles are formed by an extrusion processes wherein raw materials, including starch, can be extruded under heat and pressure to gelatinize the starch and to form the pelletized kibble form, which can be a core. Any type of extruder can be used, non-limiting examples of which include single screw extruders and twin-screw extruders.

The list of sources, ingredients, and components as described hereinafter are listed such that combinations and mixtures thereof are also contemplated and within the scope herein.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

All lists of items, such as, for example, lists of ingredients, are intended to and should be interpreted as Markush groups. Thus, all lists can be read and interpreted as items "selected from the group consisting of" ... list of items ... "and combinations and mixtures thereof."

Referenced herein may be trade names for components including various ingredients utilized in the present disclosure. The inventors herein do not intend to be limited by materials under any particular trade name. Equivalent materials (e.g., those obtained from a different source under a different name or reference number) to those referenced by trade name may be substituted and utilized in the descriptions herein.

In the description of the various embodiments of the present disclosure, various embodiments or individual features are disclosed. As will be apparent to the ordinarily skilled practitioner, all combinations of such embodiments and features are possible and can result in preferred executions of the present disclosure. While various embodiments and individual features of the present invention have been illustrated and described, various other changes and modifications can be made without departing from the spirit and scope of the invention. As will also be apparent, all combinations of the embodiments and features taught in the foregoing disclosure are possible and can result in preferred executions of the invention.

**Coated Kibble**

Various non-limiting embodiments of the present invention include a pet food in the form of a coated kibble wherein the coated kibble includes a core and a coating at least partially covering the core. In one embodiment, the pet food, or coated kibble, can be nutritionally balanced. In one embodiment, the pet food, or coated kibble, can have a moisture, or water, content less than 12%. The kibble can be made and then coated, or late-stage differentiated, with a layering or coating of a dry protein source using a binder, which results in a coated kibble having an increased animal preference. Still other embodiments of the present invention include a method of making a pet food by forming a core mixture and forming a coating mixture and applying the coating mixture to the core mixture to form a coated kibble pet food. Additional embodiments of the present invention include a method of making a pet food including two heat treating salmonella deactivation steps.

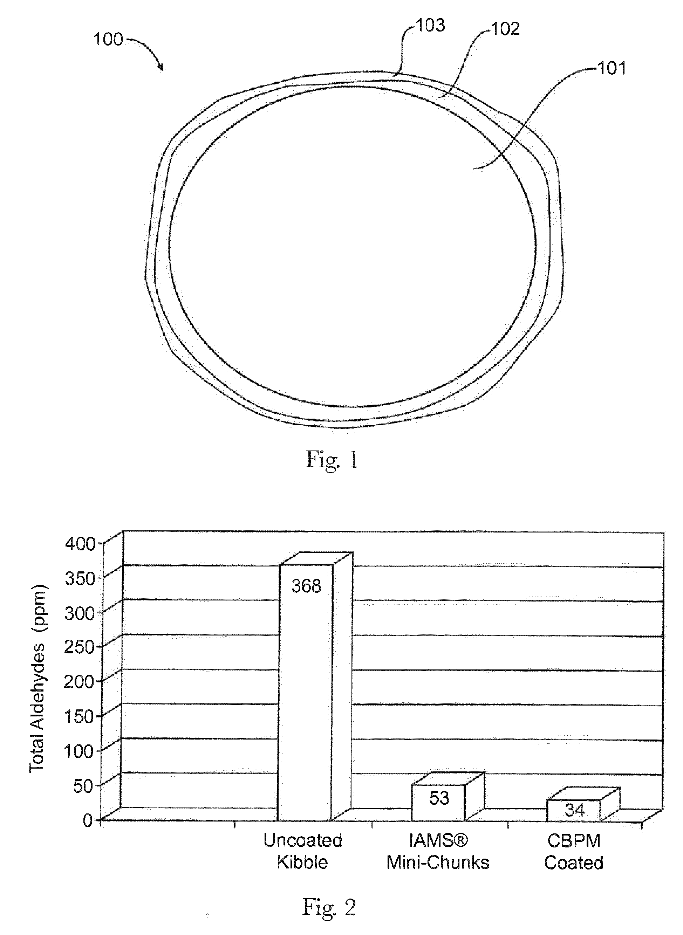

One embodiment of the present invention provides a pet food in the form of a coated kibble comprising a core, which can be extruded, a coating coated onto the core, wherein the coating comprises a protein component and a binder component. A depiction of one embodiment of a coated kibble is shown in FIG 1. FIG 1 illustrates a cross-section of a coated kibble 100. Coated kibble 100 comprises a core 101 and a coating 102 that surrounds core 101. While FIG 1 illustrates a coating completely surrounding the core, as disclosed herein the coating can only partially surround the core. In one embodiment, the coating can comprise from 0.1% to 75% by weight of the entire coated kibble, and the core can comprise from 25% to 99.9% of the entire coated kibble. In other embodiments, the coating can comprise a range of any integer values between 0.1% and 75% by weight of the coated kibble, and the core can comprise a range of any integer values between 25% and 99.9% by weight of the coated kibble. The protein component can comprise from 50% to 99% of the coating, and the binder component can comprise from 1% to 50% of the coating. In other embodiments, the protein component can comprise a range of any integer values between 50% and 99% by weight of the coating, and the binder component can comprise a range of any integer values between 1% and 50% by weight of the coating. In additional embodiments, the core can have a moisture, or water, content less than 12% and can comprise a gelatinized starch matrix, which can be formed by way of the extrusion process described herein.

In one embodiment, the coated kibble comprises a core and a coating. The core can comprise several ingredients that form a core matrix. In one non-limiting example, the core can comprise a carbohydrate source, a protein source, and/or a fat source. In one embodiment, the core can comprise from 20% to 100% of a carbohydrate source. In one embodiment, the core can comprise from 0% to 80% of a protein source. In one embodiment, the core can comprise from 0% to 15% of a fat source. The core can also comprise other ingredients as well. In one embodiment, the core can comprise from 0% to 80% of other ingredients.

The carbohydrate source, or carbohydrate ingredient, or starch ingredient, can comprise cereals, grains, corn, wheat, rice, oats, corn grits, sorghum, grain sorghum/milo, wheat bran, oat bran, amaranth, Durum, and/or semolina. The protein source, or protein ingredient, can comprise chicken meals, chicken, chicken by-product meals, lamb, lamb meals, turkey, turkey meals, beef, beef by-products, viscera, fish meal, enterals, kangaroo, white fish, venison, soybean meal, soy protein isolate, soy protein concentrate, corn gluten meal, corn protein concentrate, distillers dried grains, and/or distillers dried grains solubles. The fat source, or fat ingredient, can comprise poultry fat, chicken fat, turkey fat, pork fat, lard, tallow, beef fat, vegetable oils, corn oil, soy oil, cottonseed oil, palm oil, palm kernel oil, linseed oil, canola oil, rapeseed oil, fish oil, menhaden oil, anchovy oil, and/or olestra.

Other ingredients can comprise active ingredients, such as sources of fiber ingredients, mineral ingredients, vitamin ingredients, polyphenols ingredients, amino acid ingredients, carotenoid ingredients, antioxidant ingredients, fatty acid ingredients, glucose mimetic ingredients, Probiotic ingredients, prebiotic ingredients, and still other ingredients.

Sources of fiber ingredients can include fructooligosaccharides (FOS), beet pulp, mannanoligosaccharides (MOS), oat fiber, citrus pulp, carboxymethylcellulose (CMC), guar gum, gum arabic, apple pomace, citrus fiber, fiber extracts, fiber derivatives, dried beet fiber (sugar removed), cellulose, $\alpha$-cellulose, galactooligosaccharides, xylooligosaccharides, and oligo derivatives from starch, inulin, psyllium, pectins, citrus pectin, guar gum, xanthan gum, alginates, gum arabic, gum talha, beta-glucans, chitins, lignin, celluloses, non-starch polysaccharides, carrageenan, reduced starch, soy oligosaccharides, trehalose, raffinose, stachyose, lactulose, polydextrose, oligodextran, gentioligosaccharide, pectic oligosaccharide, and/or hemicellulose. Sources of mineral ingredients can include sodium selenite, monosodium phosphate, calcium carbonate, potassium chloride, ferrous sulfate, zinc oxide, manganese sulfate, copper sulfate, manganous oxide, potassium iodide, and/or cobalt carbonate. Sources of vitamin ingredients can include choline chloride, vitamin E supplement, ascorbic acid, vitamin A acetate, calcium pantothenate, pantothenic acid, biotin, thiamine mononitrate (source of vitamin B1), vitamin B12 supplement, niacin, riboflavin supplement (source of vitamin B2), inositol, pyridoxine hydrochloride (source of vitamin B6), vitamin D3 supplement, folic acid, vitamin C, and/or ascorbic acid. Sources of polyphenols ingredients can include tea extract, rosemary extract, rosemarinic acid, coffee extract, caffeic acid, turmeric extract, blueberry extract, grape extract, grapeseed extract, and/or soy extract. Sources of amino acid ingredients can include 1-Tryptophan, Taurine, Histidine, Carnosine, Alanine, Cysteine, Arginine, Methionine, Tryptophan, Lysine, Asparagine, Aspartic acid, Phenylalanine, Valine, Threonine, Isoleucine, Histidine, Leucine, Glycine, Glutamine, Taurine, Tyrosine, Homocysteine, Ornithine, Citruline, Glutamic acid, Proline, and/or Serine. Sources of carotenoid ingredients can include lutein, astaxanthin, zeaxanthin, bixin, lycopene, and/or beta-carotene. Sources of antioxidant ingredients can include tocopherols (vitamin E), vitamin C, vitamin A, plant-derived materials, carotenoids (described above), selenium, and/or CoQ10 (Co-enzyme Q10). Sources of fatty acid ingredients can include arachidonic acid, alpha-linoleic acid, gamma linolenic acid, linoleic acid, eicosapentanoic acid (EPA), docosahexanoic acid (DHA), and/or fish oils as a source of EPA and/or DHA. Sources of glucose mimetic ingredients can include glucose anti-metabolites including 2-deoxy-D-glucose, 5-thio-D-glucose, 3-O-methylglucose, anhydrosugars including 1,5-anhydro-D-glucitol, 2,5-anhydro-D-glucitol, and 2,5-anhydro-D-mannitol. mannoheptulose, and/or avocado extract comprising mannoheptulose. Still other ingredients can include beef broth, brewers dried yeast, egg, egg product, flax meal, DL methionine, amino acids, leucine, lysine, arginine, cysteine, cystine, aspartic acid, polyphosphates such as sodium hexametaphosphate (SHMP), sodium pyrophosphate, sodium tripolyphosphate; zinc chloride, copper gluconate, stannous chloride, stannous fluoride, sodium fluoride, triclosan, glucosamine hydrochloride, chondroitin sulfate, green lipped mussel, blue lipped mussel, methyl sulfonyl methane (MSM), boron, boric acid, phytoestrogens, phytoandrogens, genistein, diadzein, L-carnitine, chromium picolinate, chromium tripicolinate, chromium nicotinate, acid/base modifiers, potassium citrate, potassium chloride, calcium carbonate, calcium chloride, sodium bisulfate; eucalyptus, lavender, peppermint, plasticizers, colorants, flavorants, sweeteners, buffering agents, slip aids, carriers, pH adjusting agents, natural ingredients, stabilizers, biological additives such as enzymes (including proteases and lipases), chemical additives, coolants, chelants, denaturants, drug astringents, emulsifiers, external analgesics, fragrance compounds, humectants, opacifying agents (such as zinc oxide and titanium dioxide), anti-foaming agents (such as silicone), preservatives (such as butylated hydroxytoluene (BHT) and butylated hydroxyanisole (BHA), propyl gallate, benzalkonium chloride, EDTA, benzyl alcohol, potassium sorbate, parabens and mixtures thereof), reducing agents, solvents, hydrotropes, solublizing agents, suspending agents (non-surfactant), solvents, viscosity increasing agents (aqueous and non-aqueous), sequestrants, and/or keratolytics.

The Probiotic ingredient or component can comprise one or more bacterial probiotic microorganism suitable for pet consumption and effective for improving the microbial balance in the pet gastrointestinal tract or for other benefits, such as disease or condition relief or prophylaxis, to the pet. Various probiotic microorganisms known in the art. See, for example, WO 03/075676, and U.S. Published Application No. US 2006/0228448A1. In specific embodiments, the probiotic component may be selected from bacteria, yeast or microorganism of the genera *Bacillus*, *Bacteroides*, *Bifidobacterium*, *Enterococcus* (e.g., *Enterococcus faecium* DSM 10663 and *Enterococcus faecium* SF68), *Lactobacillus*, *Leuconostroc*, *Saccharomyces*, *Candida*, *Streptococcus*, and mixtures of any thereof. In other embodiments, the probiotic may be selected from the genera *Bifidobacterium*, *Lactobacillus*, and combinations thereof. Those of the genera *Bacillus* may form spores. In other embodiments, the probiotic does not form a spore. Non-limiting examples of lactic acid bacteria suitable for use herein include strains of *Streptococcus lactis*, *Streptococcus cremoris*, *Streptococcus diacetylactis*, *Streptococcus thermophilus*, *Lactobacillus bulgaricus*, *Lactobacillus acidophilus* (*e.g., Lactobacillus acidophilus* strain DSM 13241), *Lactobacillus helveticus*, *Lactobacillus bifidus*, *Lactobacillus casei*, *Lactobacillus lactis*, *Lactobacillus plantarum*, *Lactobacillus rhamnosus*, *Lactobacillus delbrukii*, *Lactobacillus thermophilus*, *Lactobacillus fermentii*, *Lactobacillus salvarius*, *Lactobacillus reuteri Bifidobacterium longum*, *Bifidobacterium infantis*, *Bifidobacterium bifidum*, *Bifictobacterium animalis*, *Bifidobacterium pseudolongum*, and *Pediococcus cerevisiae*, or mixtures of any thereof. In specific embodiments, the probiotic-enriched coating may comprise the bacterial strain *Bifidobacterium animalis* AHC7 NCIMB 41199. Other Embodments of the Probiotic ingredient may include one or more microorganisms identified in U.S. Published Application Nos. US 2005/0152884A1, US 2005/0158294A1, US 2005/0158293A1, US 2005/0175598A1, US 2006/0269534A1 and US 2006/0270020A1 and in PCT International Publication No. WO 2005/060707A2.

In at least one embodiment, a coating can be coated onto the core, described hereinabove. In at least one embodiment, the coating can be applied to the core to increase the animal preference, or pet acceptance or preference, of the coated kibble. Thus, the uncoated core can be late-stage differentiated by applying a coating, which can increase the animal preference and thus the pet acceptance or preference for the final coated kibble. In one embodiment, this uncoated core can be a core that has been already processed, including milling, conditioning, drying, and/or extruded, all as described herein.

The coating can comprise several coating components, or agents, that form a coating to coat the core of the kibble. In one non-limiting example, the coating can comprise a protein component and a binder component. In one embodiment, the coating can comprise from 50% to 99% of a protein component and from 1% to 50% of a binder component. The coating can also comprise other components as well, which can be applied with the protein component and/or binder component, or can be applied after application of the protein and/or binder component. In one embodiment, the coating can comprise from 0% to 70% of a palatant component. In one embodiment, the coating can comprise from 0% to 50% of a fat component. In one embodiment, the coating can comprise from 0% to 50% of other components.

In one embodiment, the coated kibble can have more than one coating. Thus, a first coating, second coating, third coating, and so on can be included. Each of these coatings can be comprised of any of the coating components as described herein.

In any of the embodiments described herein, the coating components can be considered a solids coating, solids component, or solids ingredient. Thus, this solids coating can comprise less than 12% moisture, or water, content. In one embodiment, the coating component comprises a protein component as a solids coating having less than 12% moisture, or water, content.

The coating as described herein can be a partial or complete covering on the surface of the core. In one example, a core may be partially covered with a coating such that only part of the core is covered, and part of the core is not covered and is thus exposed. In another example, the core may be completely covered with a coating such that the entire core is covered and thus not exposed. A coating can also be coated onto other coatings such that a layering of coatings can be present. For example, a core can be completed coated with a first coating component, and the first coating component can be completely coated with a second coating component such that the first coating component and the second coating component each form a separate layer. Of course, additional coating components can be added, such as third, fourth, fifth, sixth, up to the desired number of coating components. In one embodiment, each can form a separate layer. In another embodiment, each can form partial layers. In one embodiment, a plurality of coating components can form a single layer, and each layer more can be formed from one or a plurality of coating components.

The protein component can comprise chicken meals, chicken, chicken by-product meals, lamb, lamb meals, turkey, turkey meals, beef, beef by-products, viscera, fish meal, enterals, kangaroo, white fish, venison, soybean meal, soy protein isolate, soy protein concentrate, corn gluten meal, corn protein concentrate, distillers dried grains, distillers dried grains solubles, and single-cell proteins, for example yeast, algae, and/or bacteria cultures. One embodiment of a protein component comprises chicken by-product meal at less than 12% moisture, or water.

The binder component can comprise any of the following or combinations of the following materials: monosaccharides such as glucose, fructose, mannose, arabinose; di- and trisaccharides such as sucrose, lactose, maltose, trehalose, lactulose; corn and rice syrup solids; dextrins such a corn, wheat, rice and tapioca dextrins; maltodextrins; starches such as rice, wheat, corn, potato, tapioca starches, or these starches modified by chemical modification; oligosaccharides such as fructooligosccharides, alginates, chitosans; gums such as carrageen, and gum arabic; polyols such as glycerol, sorbitol, mannitol, xylitol, erythritol; esters of polyols such as sucrose esters, polyglycol esters, glycerol esters, polyglycerol esters, sorbitan esters; sorbitol; molasses; honey; gelatins; peptides; proteins and modified proteins such as whey liquid, whey powder, whey concentrate, whey isolate, whey protein isolate, high lactose whey by-product, such as DAIRYLAC® 80 from International Ingredient Corporation, meat broth solids such as chicken broth, chicken broth solids, soy protein, and egg white. These aforementioned binder components can be used in combination with water. The binder material can be dissolved or dispersed in water, forming a liquid mixture or solution, which can then be applied over the surface of the core. The liquid mixture can facilitate both even dispersion of the binder component over the core surface and the interaction between the core surface and the protein component being applied to the surface of the core.

In embodiments when a binder component is used, keeping the binder component on the surface of the core can be done, thus preventing, or at least attempting to minimize, absorption of the binder towards and into the core. In one embodiment, additives can be added to increase the viscosity of the binder solution. Those additives can be corn starch, potato starch, flour, and combinations and mixtures thereof. These additives can assist in keeping the binder component on the surface of the kibble to prevent or minimize absorption from the surface towards and into the core. In another embodiment, varying the temperature of the binder solution to thicken the solution can be done. For example, when using egg white as a binder component, denaturization of the proteins of the egg whites can create a gel-like solution. This formation of a gel-like solution can occur around 80°C, so in one embodiment raising the temperature of the binder solution to 80°C can be performed. Additionally, the temperature of the core can be increased to also assist in minimizing the absorption of the binder towards the core. In another embodiment, additives and temperature variation as just described can also be done in combination.

Thus, in one embodiment, the hinder component can act as a glue, or adhesive material, for the protein component to adhere to the core. In one embodiment, the protein component can be a solids ingredient at less than 12% moisture, or water, content, and the binder component can be a liquid. In one embodiment, the binder component can be applied to or layered onto the core to act as the glue for the protein component, which can then be applied to or layered onto the core with binder component. In another embodiment, the protein component as a solids ingredient can be mixed with the binder component, and then the mixture can by applied to or layered onto the core.

In one embodiment, lipids and lipid derivatives can also be used as binder components. Lipids can be used in combination with water and/or other binder components. Lipids can include plant fats such as soybean oil, corn oil, rapeseed oil, olive oil, safflower oil, palm oil, coconut oil, palm kernel oil, and partially and fully hydrogenated derivatives thereof; animal fats and partially and fully hydrogenated derivatives thereof; and waxes.

The palatant component can comprise chicken flavor, such as liquid digest derived from chicken livers, which can be approximately 70% water and chicken liver digests. A palatant component as used herein means anything that is added to the animal feed for the primary purpose of improving food acceptance, or preference, by the animal. A palatant component, which can also be considered a flavor, a flavoring agent, or a flavoring component, can include a liver or viscera digest, which can be combined with an acid, such as a pyrophosphate. Non-limiting examples of pyrophosphates include, but are not limited to, disodium pyrophosphate, tetrasodium pyrophosphate, trisodium polyphosphates, tripolyphosphates, and zinc pyrophosphate. The palatant component can contain additional palatant aids, non-limiting examples of which can include methionine and choline. Other palatant aids can include aromatic agents or other entities that drive interest by the animal in the food and can include cyclohexanecarboxylic acid, peptides, monoglycerides, short-chain fatty acids, acetic acid, propionic acid, butyric acid, 3-methylbutyrate, zeolite, poultry hydrolysate, tarragon essential oil, oregano essential oil, 2-methylfuran, 2-methylpyrrole, 2-methyl-thiophene, dimethyl disulfide, dimethyl sulfide, sulfurol, algae meal, catnip, 2-Piperidione, 2,3 pentanedione, 2-ethyl-3,5-dimethypyrazine, Furfural, Sulfurol, and Indole. In addition, various meat based flavorants or aroma agents can be used, non-limiting examples include meat, beef, chicken, turkey, fish, cheese, or other animal based flavor agents.

The fat component can comprise poultry fat, chicken fat, turkey fat, pork fat, lard, tallow, beef fat, vegetable oils, corn oil, soy oil, cottonseed oil, palm oil, palm kernel oil, linseed oil, canola oil, rapeseed oil, fish oil, menhaden oil, anchovy oil, and/or olestra.

The other components can comprise active ingredients, such as sources of fiber ingredients, mineral ingredients, vitamin ingredients, polyphenols ingredients, amino acid ingredients, carotenoid ingredients, antioxidant ingredients, fatty acid ingredients, glucose mimetic ingredients, Probiotic ingredients, prebiotic ingredients, and still other ingredients. Sources of fiber ingredients can include fructooligosaccharides (FOS), beet pulp, mannanoligosaccharides (MOS), oat fiber, citrus pulp, carboxymethylcellulose (CMC), guar gum, gum arabic, apple pomace, citrus fiber, fiber extracts, fiber derivatives, dried beet fiber (sugar removed), cellulose, α-cellulose, galactooligosaccharides, xylooligosaccharides, and oligo derivatives from starch, inulin, psyllium, pectins, citrus pectin, guar gum, xanthan gum, alginates, gum arabic, gum talha, beta-glucans, chitins, lignin, celluloses, non-starch polysaccharides, carrageenan, reduced starch, soy oligosaccharides, trehalose, raffinose, stachyose, lactulose, polydextrose, oligodextran, gentiooligosaccharide, pectic oligosaccharide, and/or hemicellulose. Sources of mineral ingredients can include sodium selenite, monosodium phosphate, calcium carbonate, potassium chloride, ferrous sulfate, zinc oxide, manganese sulfate, copper sulfate, manganous oxide, potassium iodide, and/or cobalt carbonate. Sources of vitamin ingredients can include choline chloride, vitamin E supplement, ascorbic acid, vitamin A acetate, calcium pantothenate, pantothenic acid, biotin, thiamine mononitrate (source of vitamin B1), vitamin B12 supplement, niacin, riboflavin supplement (source of vitamin B2), inositol, pyridoxine hydrochloride (source of vitamin B6), vitamin D3 supplement, folic acid, vitamin C, and/or ascorbic acid. Sources of polyphenols ingredients can include tea extract, rosemary extract, rosemarinic acid, coffee extract, caffeic acid, turmeric extract, blueberry extract, grape extract, grapeseed extract, and/or soy extract. Sources of amino acid ingredients can include 1-Tryptophan, Taurine, Histidine, Carnosine, Alanine, Cysteine, Arginine, Methionine, Tryptophan, Lysine, Asparagine, Aspartic acid, Phenylalanine, Valine, Threonine, Isoleucine, Histidine, Leucine, Glycine, Glutamine, Taurine, Tyrosine, Homocysteine, Ornithine, Citruline, Glutamic acid, Proline, and/or Serine. Sources of carotenoid ingredients can include lutein, astaxanthin, zeaxanthin, bixin, lycopene, and/or beta-carotene. Sources of antioxidant ingredients can include tocopherols (vitamin E), vitamin C, vitamin A, plant-derived materials, carotenoids (described above), selenium, and/or CoQ10 (Co-enzyme Q10). Sources of fatty acid ingredients can include arachidonic acid, alpha-linoleic acid, gamma linolenic acid, linoleic acid, eicosapentanoic acid (EPA), docosahexanoic acid (DHA), and/or fish oils as a source of EPA and/or DHA. Sources of glucose mimetic ingredients can include glucose anti-metabolites including 2-deoxy-D-glucose, 5-thio-D-glucose, 3-O-methylglucose, anhydrosugars including 1,5-anhydro-D-glucitol, 2,5-anhydro-D-glucitol, and 2,5-anhydro-D-mannitol, mannoheptulose, and/or avocado extract comprising mannoheptulose. Still other ingredients can include beef broth, brewers dried yeast, egg, egg product, flax meal, DL methionine, amino acids, leucine, lysine, arginine, cysteine, cystine, aspartic acid, polyphosphates such as sodium hexametaphosphate (SHMP), sodium pyrophosphate, sodium tripolyphosphate; zinc chloride, copper gluconate, stannous chloride, stannous fluoride, sodium fluoride, triclosan, glucosamine hydrochloride, chondroitin sulfate, green lipped mussel, blue lipped mussel, methyl sulfonyl methane (MSM), boron, boric acid, phytoestrogens, phytoandrogens, genistein, diadzein, L-carnitine, chromium picolinate, chromium tripicolinate, chromium nicotinate, acid/base modifiers, potassium citrate, potassium chloride, calcium carbonate, calcium chloride, sodium bisulfate; eucalyptus, lavender, peppermint, plasticizers, colorants, flavorants, sweeteners, buffering agents, slip aids, carriers, pH adjusting agents, natural ingredients, stabilizers, biological additives such as enzymes (including proteases and lipases), chemical additives, coolants, chelants, denaturants, drug astringents, emulsifiers, external analgesics, fragrance compounds, humectants, opacifying agents (such as zinc oxide and titanium dioxide), anti-foaming agents (such as silicone), preservatives (such as butylated hydroxytoluene (BHT) and butylated hydroxyanisole (BHA), propyl gallate, benzalkonium chloride, EDTA, benzyl alcohol, potassium sorbate, parabens and mixtures thereof), reducing agents, solvents, hydrotropes, solublizing agents, suspending agents (non-surfactant), solvents, viscosity increasing agents (aqueous and non-aqueous), sequestrants, and/or keratolytics.

The Probiotic ingredient or component can comprise one or more bacterial Probiotic microorganism suitable for pet consumption and effective for improving the microbial balance in the pet gastrointestinal tract or for other benefits, such as disease or condition relief or prophylaxis, to the pet. Various probiotic microorganisms known in the art. See, for example, WO 03/075676, and U.S. Published Application No. US 2006/0228448A1. In specific embodiments, the probiotic component may be selected from bacteria, yeast or microorganism of the genera *Bacillus*, *Bacteroides*, *Bifidobacterium*, *Enterococcus* (e.g., *Enterococcus faecium* DSM 10663 and *Enterococcus faecium* SF68), *Lactobacillus*, *Leuconostroc*, *Saccharomyces*, *Candida*, *Streptococcus*, and mixtures of any thereof. In other embodiments, the Probiotic may be selected from the genera *Bifidobacterium*, *Lactobacillus*, and combinations thereof. Those of the genera *Bacillus* may form spores. In other embodiments, the Probiotic does not form a spore. Non-limiting examples of lactic acid bacteria suitable for use herein include strains of *Streptococcus lactis*, *Streptococcus cremoris*, *Streptococcus dicicetylactis*, *Streptococcus thermophilus*, *Lactobacillus bulgaricus*, *Lactobacillus acidophilus* (e.g., *Lactobacillus acidophilus* strain DSM 13241), *Lactobacillus helveticus*, *Lactobacillus bifidus*, *Lactobacillus casei*, *Lactobacillus lactis*, *Lactobacillus plantarum*, *Lactobacillus rhamnosus*, *Lactobacillus delbrukii*, *Lactobacillus thermophilus*, *Lactobacillus fermentii*, *Lactobacillus salvarius*, *Lactobacillus reuteri*, *Bifidobacterium longum*, *Bifidobacteriun infantis*, *Bifidobacterium bifidum*, *Bifidobacterium animalis*, *Bifidobacterium pseudolongum*, and *Pediococcus cerevisiae*, or mixtures of any thereof. In specific embodiments, the Probiotic-enriched coating may comprise the bacterial strain *Bifidobacterium animalis* AHC7 NCIMB 41199. Other embodiments of the Probiotic ingredient may include one or more microorganisms identified in U.S. Published Application Nos. US 2005/0152884A1, US 2005/0158294A1, US 2005/0158293A1, US 2005/0175598A1, US 2006/0269534A1, and US 2006/0270020A1 and in PCT International Publication No. WO 2005/060707A2.

These active ingredients can be provided in any form, such as in a dry form. A dry form of an active can be a form that comprises less than 12% moisture, or water, and thus can be considered a solids ingredient. Thus, in one embodiment, a Probiotic component can be provided in a dry form as a powder, such as with an average particle size of less than 100 micrometers. At less than 100 micrometers, the Probiotic component can be adhered more easily to the kibble. In one embodiment, Probiotic components can have a particle size greater than 100 micrometers. However, in this embodiment, more binder can be used to aid in adherence of the Probiotic to the kibble. The Probiotic component in the form of a dry powder can be applied as part of the coating to the core, resulting in a coated kibble having a Probiotic in the coating.

Thus, the coating can comprise active ingredients. Therefore, one embodiment of the present invention relates to a method of delivering active ingredients to a pet or animal, wherein the active ingredients can comprise any of the active ingredients disclosed herein, including mixtures and combinations thereof. In one embodiment, a pet food in the form of a coated kibble is provided. The coated kibble can comprise a core as described herein, and the coated kibble can comprise a coating as disclosed herein. In one embodiment, the coating comprises coating components, comprising a protein component as disclosed herein, a binder component as described herein, a fat component as described herein, a palatant component as described herein, and active ingredients as described herein. In one embodiment, the protein component, the fat component, and the palatant component, and combinations and mixtures thereof, can act as a carrier for the active ingredient. In another embodiment, the active ingredients can be a solids ingredient, such that the moisture, or water, content is less than 12%. The pet food in the form of a coated kibble, comprising active ingredients, can be provided to a pet or animal for consumptions. The active ingredient can comprise from 0.01% to 50% of the coating.

Thus, embodiments of the present invention contemplate coated kibbles comprising at least one active ingredient. Thus, one embodiment of the present invention relates to delivering active ingredients through a coated kibble in accordance with embodiments of the coated kibble as disclosed herein. It has been found that a coated kibble of embodiments of the present invention can increase animal preference of the coated kibble comprising an active ingredient and can increase the stability of the active ingredient.

Still other components can comprise components that can assist in reducing water transmission within the coated kibble. Components can include cocoa butter, palm kernel oil, palm oil, cottonseed oil, soybean oil, canola oil, rapeseed oil, hydrogenated derivatives of oils or fats, paraffin, wax, liquid paraffin, solid paraffin, candelilla wax, carnauba wax, microcrystalline wax, beeswax, capric acid, myristic acid, palmitic acid, stearic acid, acetyl acyl glycerols, shellac, dewaxed gumlac, triolein, peanut oil, chocolate, methylcellulose, triolein, stearic acid, hydroxypropylmethylcellulose, glycerol monostearate, methylcellulose, polyethylene glycol, behinic acid, adipic acid, carboxymethylcellulose, butter oil, pectin, acetylated monoglyceride, wheat gluten, oleic acid, soy lecithin, paraffin wax, paraffin oil, sodium caseinate, lauric acid, whey protein isolate, whey protein concentrate, stearyl alcohol, olestra, acetylated monoglycerides, chocolate liquor, sweet milk chocolate, cocoa solids, tristearin, animal fat, and/or poultry fat.

In one embodiment of the present invention, the protein component of the coating can be a dry component, or a solids ingredient, such that the water content of the protein component is less than 12%. Therefore, in this embodiment, the protein component, or solids ingredient, can act as a solid-like material that can be coated onto a core by using a binder ingredient. A protein component having less than 12% moisture, or water, can be extremely difficult to coat onto a core, or kibble, which itself can have a low moisture, or water, content, even less than 12%, as described herein. Thus, a binder component can assist in the coating of the dry protein component onto the core, or kibble.

In one embodiment, the finished coated kibble can comprise from 80% to 90% core and from 10% to 20% coating. The core can comprise from 45% to 55% carbohydrate source, from 35% to 45% protein source, from 0.1% to 5% fat source, and from 5% to 10% other ingredients. The coating can comprise from 65% to 75% protein component, a non-limiting of which can be chicken by-product meal, from 5% to 10% binder component, a non-limiting example of which can be egg white, high lactose whey by-product, whey protein isolate or chicken broth, from 15% to 25% fat component, a non-limiting example of which can be chicken fat, and from 1% to 10% palatant component, a non-limiting example of which can be chicken liver digest. The coated kibble can comprise less than 12% water.

Macronutrients that can be included in the kibble of embodiments of the present invention can include protein sources/ingredients/components, fat sources/ingredients/components, and carbohydrate sources/ingredients/components, and mixtures and combinations thereof, all as described hereinabove. The macronutrient can be selected from the group consisting of protein sources/ingredients/components, fat sources/ingredients/components, carbohydrate sources/ingredients/components, and combinations and mixtures thereof, all as described hereinabove. These macronutrients can be distributed between the core and the coating such that the core comprises a particular amount of the macronutrients, and the coating comprises a particular amount of the macronutrients, all as a whole. In one embodiment, the distribution of the macronutrients between the core and the coating can be in a ratio of 12 to 1. In one embodiment, the distribution of the macronutrients between the core and the coating can be in a ratio of 1 to 12. In one embodiment, the distribution of the macronutrients between the core and the coating can be between a ratio of 12 to 1 and 1 to 12 and all integer values therebetween. The distribution of the macronutrients, as described, is as a mixture of the macronutrients of protein sources/ingredients/components, fat sources/ingredients/components, and carbohydrate sources/ingredients/components. Thus, in one embodiment in which the distribution of macronutrients ratio is 12 to 1 between the core and the coating, this embodiment represents a distribution of total protein sources/ingredients/components, fat sources/ingredients/components, and carbohydrate sources/ingredients/components, as a sum, of 12 to 1 between the core and the coating. Thus, in this embodiment, a ratio of 12 units of protein plus fat plus carbohydrate to 1 unit of protein plus fat plus carbohydrate exists.

**Process**

The kibble embodiments of the present invention may be formed by an extrusion process whereby the core ingredients, after formed into a core matrix, as described hereinabove, are extruded under heat and pressure to form a pelletized kibble form, or core pellet. During the extrusion process, if a starch matrix is employed, it may and typically does become gelatinized under the extrusion conditions.

In one embodiment, the extruding of the core matrix may be done using a single screw extruder, while other embodiments may be done using a twin-screw extruder. Extrusion of the core matrix may require specific configurations of the extruder to produce a material suitable for a kibble pet food. For example, very high shears and low extrusion times may be necessary to prevent significant color degradation and prevent polymerization of the material within the extruder and to produce kibbles that are durable for further processing, such as coating with one or more coatings.

In one embodiment, the coated kibble may be manufactured by contacting a mass of core pellets, as such extruded, and a coating component in a counter-rotating dual-axis paddle mixer.

In one embodiment, the ingredients used for a core matrix for forming into a core, or core material, may be any individual starting components, including, but not limited to, the sources/ingredients described hereinabove.

Processes common to making dry pet foods are milling, batching, conditioning, extrusion, drying, and coating. Milling encompasses any process used to reduce whole or partial ingredients into smaller forms. Whole or partial formulations are created in the process step for batching by mixing dry and/or liquid ingredients. Often these ingredients are not in the most nutritious or digestible form and thus processes are needed to further convert these ingredients to a digestible form via some sort of cooking process.

During the milling process, the individual starting components of the core material can be mixed and blended together in the desired proportions to form the core material. In one embodiment, the resulting core material may be screened to remove any large agglomerate of material therefrom. Any sort of conventional solids mixer can be used for this step including, but not limited to, plough mixers, paddle mixers, fluidizing mixers, conical mixers, and drum mixers. One skilled in the art of solids mixing would be able to optimize the mixing conditions based on the types of materials, particle sizes, and scale, from any one of a number of widely available textbooks and articles on the subject of solids mixing.

The core material mixture can then be fed into a conditioner. Conditioning may be used to pretreat the ingredients and can include hydration, addition/mixing of other ingredients, and partial cooking. Cooking can often be accomplished by the addition of heat in the form of steam and can result in discharge temperatures of from 113°F to 212°F. Pressurized conditioning may be used when temperatures need to be elevated above standard atmospheric conditions, such as at greater than 212°F. Conditioned ingredients and/or ingredients, or combinations thereof, can then be transferred to an extruder for further processing.

The core material, such conditioned, can then be subjected to an extrusion operation in order to obtain an expanded core pellet. In one embodiment, the core material may be routed to a hopper prior to the extrusion operation. The extruder may be any suitable single or twin screw cooking extruder. Suitable extruders may be obtained from Wenger Manufacturing Inc., Clextral SA, Buhler AG, and the like. The extruder operating conditions may vary depending on the particular product to be made. For example, the texture, hardness, or bulk density of the extruded product may be varied using changes in the extruder operating parameters. Similar to conditioning, extrusion can be used to incorporate other ingredients (non-limiting examples of which are carbohydrates, proteins, fats, vitamins, minerals, and preservatives) by having dry and/or liquid ingredient streams added anywhere along the length of the extruder feed port, barrel, or die. Extruders are often, but not limited to, single- or twin-screw in design and operate up to 1700 rpm. The extrusion process can often be accompanied with high pressure (up to 1500 psig) and high temperature (up to 250°C). Extrusion can be used to accomplish the making of continuous ropes or sheets but also discrete shapes and sizes of edible food. These forms, shapes, and sizes are often the result of forcing the materials through a die or set of die openings and cutting or breaking into smaller segments.

At this stage, the extruded product can be in any form, such as extruded ropes, sheets, shapes, or other segments, and can be in an expanded moist pellet form that can then be transferred to post-extrusion operations. These can include crimping, shredding, stamping, conveying, drying, cooling, and/or coating in any combination or multiple of process flow. Crimping is any process that pinches food together. Shredding is any process that reduces the size of the food upon extrusion, preferably by tearing. Stamping is any process that embosses a surface or cuts through a food. Conveying is used to transport food from one operation to another and may change or maintain the state of the food during transport; often this process is mechanical or pneumatic. Drying can be used to reduce process moisture, or water, to levels suitable for shelf-life in the finished product. If as an expanded moist pellet, such as a kibble, the pellets can be transported from the extruder outlet to a dryer, such as a dryer oven, by a conveying, airveying, or auguring system. After expansion and transport to the entrance to the dryer, the kibbles can typically have been cooled to between 85°C and 95°C and kibble moisture, or water, reduce by evaporation from about 25-35% to about 20-28%. The temperature of the drying oven may be from 90°C to 150°C. The temperature of the core pellets exiting the drying oven may be from 90°C to 99°C. At this stage, coating of the pellets can be performed. Coating can be performed to add carbohydrates, proteins, fats, water, vitamins, minerals, and other nutritional or health benefit ingredients to the food to make an intermediate or finished product. Cooling of the core pellets can be used to reduce the temperature from extrusion and/or drying.

Thus, at this stage, the core pellets, or core, can be considered cooked such that any starch component that was used can be gelatinized. The core pellets can then be fed to a fluidizing mixer for the application of a coating in the manufacture of a food pellet, such as a coated kibble. In one embodiment, the core pellets may be routed to a hopper prior to entering the fluidizing mixer. The coated kibble may be formed by contacting the core with a coating in a fluidizing mixer. In one embodiment, the fluidizing mixer can be a counter-rotating dual-axis paddle mixer, wherein the axes can be oriented horizontally with paddles attached to the counter-rotating axes. A suitable counter-rotating dual-axis paddle mixer may be obtained from Forberg International AS, Larvik, Norway; Eirich Machines, Inc, Gurnee, Ill., USA, and Dynamic Air Inc., St. Paul, Minn., USA. The motion of the paddles in-between the shafts constitutes a converging flow zone, creating substantial fluidization of the particles in the center of the mixer. During operation of the mixer, the tilt of paddles on each shaft may create opposing convective flow fields in the axial directions generating an additional shear field in the converging flow zone. The downward trajectory of the paddles on the outside of the shafts constitutes a downward convective flow.

In one embodiment, the fluidizing mixer can have a converging flow zone located in-between the counter-rotating paddle axes. In one aspect, the swept volumes of said counter-rotating paddle axes overlap within the converging flow zone. As used herein, the term "swept volume" means the volume that is intersected by a mixing tool attached to a rotating shaft during a full rotation of the shaft. In one aspect, the swept volumes of the counter-rotating paddle axes do not overlap within the converging flow zone. In one aspect, a gap can exist in the converging flow zone between the swept volumes of the counter-rotating paddle axes.

As described above, in one embodiment, the coating can comprise a protein component and a binder component. In one embodiment, the protein component and the binder component are mixed together into a single mixture or pre-mixed coating, prior to addition to the mixer. In another embodiment, the protein component and the binder component are not mixed together into a single mixture prior to addition to the mixer.

In one embodiment, the pre-mixed coating can be introduced or fed into the counter-rotating dual-axis paddle mixer such that the pre-mixed coating is directed upward into the converging zone between the counter-rotating paddle axes. The counter-rotating dual axis paddle mixer can have a converging flow zone between the counter-rotating paddle axes. Either overlapping or non-overlapping paddles can be used. The pre-mixed coating can be directed into the gap between the swept volumes of the counter-rotating paddle axes. In one aspect, the ingress of the pre-mixed coating into the dual-axis paddle mixer can occur through a distributor pipe located below the converging flow zone of the counter-rotating paddle axes. The distributor pipe can comprise at least one opening through which the coating passes into the dual-axis paddle mixer. In one aspect, the ingress of the pre-mixed coating into the dual-axis paddle mixer can occur by adding the pre-mixed coating along the side or sides of the mixer, preferably the sides parallel to the paddles axles. Material is swept downward to the bottom of the mixer and then is swept back upward into the converging flow zone of the counter-rotating paddle axes.

In one embodiment, the pre-mixed coating can be introduced into the counter-rotating dual-axis paddle mixer such that the pre-mixed coating is directed downward on top of the converging zone between the counter-rotating paddle axes. In one embodiment, the pre-mixed coating can be introduced into the counter-rotating dual-axis paddle mixer such that the pre-mixed coating is directed downward into the convective flow on the outside of the counter-rotating paddle axes.

In one embodiment, the coating components, such as the protein component, fat component, binder component, and/or palatant component, and combinations and mixtures thereof, can be separately introduced into the counter-rotating dual-axis paddle mixer such that the coating components are directed upward into the converging zone between the counter-rotating paddle axes. The counter-rotating dual axis paddle mixer may have a converging flow zone between the counter-rotating paddle axes. The coating components can be directed into the gap between the swept volumes of the counter-rotating paddle axes. In one aspect, the ingress of the coating components into the dual-axis paddle mixer can occur through a distributor pipe located below the converging flow zone of the counter-rotating paddle axes. The distributor pipe may comprise at least one opening through which the coating component passes into the dual-axis paddle mixer. In one aspect, the ingress of the coating component into the dual-axis paddle mixer can occur by adding the separate coating component along the side or sides of the mixer, preferably the sides parallel to the paddles axles. Material is swept downward though to the bottom of the mixer and then is swept back upward into the converging flow zone of the counter-rotating paddle axes.

In one embodiment, the coating components can be separately introduced into the counter-rotating dual-axis paddle mixer such that the coating components are directed downward on top of the converging zone between the counter-rotating paddle axes. In one embodiment, the coating components can be introduced into the counter-rotating dual-axis paddle mixer such that the coating components are directed downward into the convective flow on the outside of the counter-rotating paddle axes.

In one embodiment, the protein component can be introduced into the counter-rotating dual-axis paddle mixer such that the protein component is directed upward into the converging zone between the counter-rotating paddle axes. The counter-rotating dual axis paddle mixer can have a converging flow zone between the counter-rotating paddle axes. The protein component can be directed into the gap between the swept volumes of the counter-rotating paddle axes. In one aspect, the ingress of the protein component into the dual-axis paddle mixer can occur through a distributor pipe located below the converging flow zone of the counter-rotating paddle axes. The distributor pipe may comprise at least one opening through which the protein component passes into the dual-axis paddle mixer. In one aspect, the ingress of the protein component into the dual-axis paddle mixer can occur by adding the protein component along the side or sides of the mixer, preferably the sides parallel to the paddles axles. Material is swept downward to the bottom of the mixer and then is swept back upward into the converging flow zone of the counter-rotating paddle axes.

In one embodiment, the binder component can be introduced into the counter-rotating dual-axis paddle mixer such that the binder component is directed downward on top of the converging zone between the counter-rotating paddle axes.

In one embodiment, a single fluidizing mixing unit can he employed. In one embodiment, multiple fluidizing mixing units are employed such as, for example, cascading mixers of different coating components for coating on the core pellet. In one embodiment, multiple mixers may be employed, such as, for example, cascading mixers of progressively increasing volume capacity. It is believed that the increase in volume capacity may accommodate an increase in product capacity. In one embodiment, the coating process can occur at least once. In one embodiment, the coating process may occur as many times as desired to manufacture the desired food pellet. In one embodiment, the coating process may be repeated as many times as determined to be sufficient by one of ordinary skill to increase the core pellet mass by a factor of more than about 1.04 to about 4 when compared to the initial mass of the core pellet.

In one embodiment, the binder component can be introduced into the mixing unit. Application of the binder component can begin prior to application of the protein component. After the beginning of the application of the binder component, but while binder component is still being applied, application of the protein component can begin. Thus, a core coated with a binder component and a protein component can be formed. After this coated core is formed, a salmonella deactivation step, as described hereinafter, can be performed. After this salmonella deactivation step, a fat component and a palatant component can be introduced into the mixing unit as additional coating components.

In one embodiment, the protein component and the binder component can be introduced into the mixing unit as coating components at substantially the same time. Thus, a core coated with a binder component and a protein component can be formed. After this coated core is formed, a salmonella deactivation step, as described hereinafter, can be performed. After this salmonella deactivation step, a fat component and a palatant component can be introduced into the mixing unit as additional coating components.

In other embodiments, application of the protein component, binder component, fat component, and palatant component can be performed in any order and with any amount of overlapping of application times.

In one embodiment, the gap between a paddle tip and fluidizing mixer wall can be greater than the largest dimension of the core pellet being coated. While not being bound by theory, it is believed that such a gap clearance prevents the core pellets from becoming lodged between the paddle tip and the wall, possibly causing core pellet breakage.

In one embodiment, the gap between a paddle tip and fluidizing mixer wall can be smaller than the smallest dimension of the core pellet being coated. While not being bound by theory, it is believed that such a gap clearance prevents the core pellets from becoming lodged between the paddle tip and the wall, possibly causing core pellet breakage.

In one embodiment, the temperature of the core pellets at the start of the coating process is from 1°C to 40°C lower than the melting point temperature of the higher melting point temperature component. Too high of a core pellet temperature may result in a delay of the coating component crystallizing onto the surface of the core pellet which may lead to loss of the coating component from the core pellet or uneven distribution of the coating component either upon the individual core pellets or among the individual core pellets. Too low of a temperature of the core pellets may cause the higher melting point temperature component droplets to immediately crystallize on touching the surface of the core pellets.

In one embodiment, the coating component contacts the surface of the core pellet as a liquid and remains liquid for a brief period of time to allow the coating component to spread among the core pellets through surface contact among the core pellets as the core pellets are mixed in the fluidizing mixer. In one embodiment, the coating component remains a liquid for a time period from 1 second to 15 seconds. Without being bound by theory, it is believed that if the temperature of the core pellets or the higher melting point temperature component is too low that it would cause the higher melting point temperature component to solidify too soon in the manufacturing process. It is believed that it is the early solidification of the higher melting point temperature component that leads to difficulties such as agglomeration, stickiness, and uneven coating.

In one embodiment, the temperature of the core pellets at the start of the coating process will be at ambient temperature or above ambient temperature. A process may provide the core pellets at ambient or greater than ambient temperature. Coatings that do not derive an advantage from cooling the core pellets for reasons of crystallization or viscosity increase may derive an advantage with using the core pellets directly as provided to the mixer and not cooling the core pellets.

In one embodiment, the core pellets and the coating component can be introduced into the paddle mixer at separate times but at substantially identical physical locations. In one embodiment, the core pellets and the coating can be introduced into the paddle mixer at the same time and substantially identical physical locations. In one embodiment, the core pellets and the coating can be introduced into the paddle mixer at separate times and at separate locations. In one embodiment, the core pellets and the coating can be introduced into the paddle mixer at the same time and separate locations. In one embodiment, the core pellets can be added to the mixer, the mixer is started, and fluidization of the kibbles beings. The kibbles can be optionally further cooled by introducing a stream of cold air or gas such as carbon dioxide. The coating can then be added down the side of the mixer. By introducing the material to be coated down the side of the mixer, the material can be swept down with the descending core flow across the bottom of the mixer then up into the fluidized zone with the core, where all of it can be coated. When the coating is added down the side(s), it not only gets swept down with the core flow, then up towards the center, it also can be intimately mixed and dispersed with the cores. The cores are not only getting swept down, then up and around, but at the same time they are moving around the mixer from side to side.

In one embodiment, the coating process may have an average core pellet residence time in the dual-axis paddle mixer of from 0 minutes to 20 minutes. In one embodiment, the core pellet residence time in the dual-axis paddle mixer may be from 0.2, 0.4, 0.5, or 0.75 minutes to 1, 1.5, 2, 1.5, or 3 minutes.

The Froude number of the mixer can be greater than 0.5, or even greater than 1.0, during operation of forming a coated kibble. The Froude number is defined as a dimensionless number $(Fr) = (V^2/Rg)$ and relates inertial forces to those of gravity; R is the length of the paddle from the centerline of the axle to the tip of the paddle (cm), V is the tip speed of the paddle (cm/sec), and g is the gravitational constant. The Froude number is a dimensionless number comparing inertial forces and gravitational forces. The inertial forces are the centrifugal forces that are mixing the cores and coatings. No material properties are accounted for in the Froude number. When the Froude number is greater than about 1, the centrifugal forces hurling the cores and other material up in the center are greater than the gravitational forces pulling them back down. Thus, the kibbles are briefly suspended in air. In this state, materials such as coating materials can move freely around, and onto, the core, thus ensuring close to even, and including even, coating. In one embodiment, if the Froude number is too high, the kibble may be thrown against the top and/or the sides of the mixer with such force as to crack, chip, or break the kibbles, or, if the top of the mixer is open, the kibbles may be ejected from the mixer entirely. In one embodiment, the Froude number can be above about 0.5 and below about 3.

If the binder component is added separately over the top of the fluidized zone of the mixer, and the protein component is added separately below the fluidized zone, it may be effective to split the protein components into two streams and introduce the streams at opposite corners of the mixer, one on either side of the binder addition zone whereby the protein component(s) travel downward along the side or sides of the mixer, preferably the sides parallel to the paddles axles. Material is swept downward to the bottom of the mixer and then is swept back upward into the converging flow zone of the counter-rotating paddle axes.

Without being limited by theory, it is believed that this sets up two convective loops of protein components circulating in the mixer, one on either side of the binder addition zone. A single complete circuit of the protein components through a convective loop is referred to as the convective cycle time. It is believed that holding the convective cycle time constant regardless of the size of the mixer can achieve a similar distribution of the coating over the surface of the core pellets regardless of the size of the mixer.

It may often be convenient to include more than one binder component spray zone on the top of the fluidized zone in order to improve the evenness of the coating. Each binder addition zone may include two protein addition points, one on either side of the individual spray zone. The protein addition points can be below the fluidized zone, and the binder addition points can be above the fluidized zone of the mixer. Thus, two separate binder addition points above the fluidized zone of the mixer can include four separate binder addition points below the fluidized zone.

The binder flux is defined as the amount of binder component in grams that passes downward though a given area on the top of the fluidized zone. The coating addition flux is defined as the amount of coating component in grams through the same given area upward through the fluidized zone. The dimensionless flux is defined as the binder flux divided by the coating flux and the number of convective loops in the mixer. While not being limited by theory, it is believed that holding the dimensionless flux constant regardless of the size of the mixer can help achieve a similar distribution of the coating over the surface of the core pellets regardless of the size of the mixer.

If a water-based binder is used to apply the coating, or if the product has had steam applied after the coating step as described herein, it may be desirable to dry the product in one embodiment. Drying can be accomplished by any of the methods described herein. The exact conditions of the drying will depend on the type of dryer used, the amount of moisture, or water, removed, the temperature sensitivity of the applied coating, and the final moisture, or water, level of the product required. One skilled in the art would be able to adjust these factors appropriately to achieve the desired product. Additionally, drying can be performed in the mixer where the coating took place. A stream of dry air at a temperature elevated above ambient can be passed over the product at a sufficient rate to remove the amount of moisture, or water, required over the time period required. In one embodiment, using a fluidized mixer, the air can be directed on top of the product, directly over the center of the fluidized zone, while the product is being agitated. In one embodiment, the air can be directed down one or both sides of the mixer so that the flow of the air is the forced upward through the fluidized zone. In one embodiment, the air can be introduced into the mixer by means of manifolds on the inside walls of the mixer. In one embodiment, the air can be introduced into the mixer by means of a manifold at the bottom of the mixer, below the fluidized zone. One skilled in the art would be able to adjust the mixer agitation rate to compensate for any effects on the fluidized behavior of the product by the introduction of air flow.

## Salmonella Deactivation Steps

Additional embodiments of the present invention include a method of making a pet food including at least one heat treating salmonella deactivation step. The pet food can be in any form of embodiments of the pet food described hereinabove, and it can also include any other pet food. In one embodiment, a non-limiting example of which is a coated kibble that comprises a core and a coating as hereinabove described, two heat treating deactivation steps can be performed. The core can be formed through extruding, as described hereinabove. After extruding into a core, the core can be heat treated in a manner to sufficiently deactivate any salmonella present in the core. Subsequently, prior to, or contemporaneously with, the coating can be formed and heat treated in a similar manner as that of the core to deactivate any salmonella present. The coated kibble can then be formed, as described hereinabove, by coating the core with the coating.

Salmonella generally require the application of heat while the microbes are in a moist environment. Once completely dry, salmonella can become dormant and resist efforts using dry heat to deactivate them. In a moist environment, salmonella are more readily deactivated. For example, the application of heat at 80°C for greater than about two minutes can effectively deactivate salmonella when in a moist environment. Application of temperatures higher than 80°C in moist environments results in correspondingly shorter times needed to deactivate the salmonella.

Superheated steam has been used effectively in many industries to deactivate salmonella. Superheated steam is defined as steam at a temperature greater than the boiling point of water for the existing pressure. Most industrial use of superheated steam utilize pure or substantially pure steam. The non-steam component is usually air.

However, it has now additionally been found that salmonella can be effectively deactivated with humid hot air, at ambient pressure, at temperatures greater than about 80°C. One advantage of this method is that humid hot air can be injected into the fluidizing mixer at ambient pressure conditions during or after the coating step. The temperature of the humid hot air can be greater than 80°C. Higher temperatures can result in shorter times of application of humid hot air to effectively deactivate salmonella. The relative humidity of the air can be greater than 50% and can even be greater than 90%. Relative humidity is defined as the ratio of the partial pressure of water vapor in the air to the saturated vapor pressure of water at a given temperature.

Thus, in one embodiment, hot air at greater than 80°C and up to 200°C is blown into the top of the mixer where a coated kibble has been formed. The air can be blown at about 0 to 80 CFM. Once the hot air starts blowing into the mixer, steam at a pressure of 0 to 30 PSIG and at a rate of about 0 to 4 kg/min can be injected into the mixer for 0 to about 2 minutes. The combination to hot air and steam in the mixer results in a hot air stream that can reach about 95% relative humidity. At the end of from 0 to 2 minutes, the steam can be stopped but the hot air can be continued for an additional up to 8 minutes. During this period, the relative humidity inside the mixer drops, and, as it drops, moisture, or water, is removed from the surface of the kibble. At the end of the cycle of hot air, the salmonella will be sufficiently deactivated.

An additional method of heat treating, or deactivating, salmonella of the pet food in accordance with one embodiment of the present invention is disclosed in RU 2251364.

**Vitamin Stability**

It has been found that a coated kibble and processes of making thereof in accordance with embodiments of the present invention can allow for the coating of the kibble with temperature, pressure, and moisture sensitive ingredients, including all of the ingredients, sources, and components described herein. In one embodiment, the sensitive ingredients bypass the normally stressful conditions of extrusion processes and conditions as are customarily used in the art.

Additionally, it has been found that a coated kibble according to embodiments of the present invention can enhance vitamin delivery stability as well as reduce cost savings due to loss of vitamins during normal, heretofore used extrusion processes.

Embodiments of the present invention are related to providing, or delivering, sensitive ingredients. Non-limiting examples of sensitive ingredients include the other ingredients as described herein, including the active ingredients described herein, which include vitamins. Sensitive ingredients are those which are generally thought of as temperature, moisture, and pressure sensitive, such that certain conditions of temperature, moisture, and pressure can negatively impact the efficacy of the sensitive ingredient, including by increasing loss of the sensitive ingredient during processing or during storage. Thus, bypassing the normal stressful conditions of an extrusion process by being added to the core kibble after the core is extruded can be advantageous for sensitive ingredients. Thus, in one embodiment, the core kibble of any of the embodiments disclosed herein can be late-stage differentiated with sensitive ingredients, including vitamins, as described herein. Vitamins can be highly susceptible to oxidative conditions of extrusion, resulting in over formulation of vitamin pre-mix before entering the extrusion process to ensure appropriate levels of vitamins at the time of consumption by the pet. Coating the vitamins in a fluidized mixer as disclosed herein would not expose the vitamins to harsh conditions and could maintain the physical and chemical integrity of the vitamin and any stabilizers. As a result, the vitamin retention in the process increases, and the stability in storage can improve. As used herein, vitamin component includes vitamins and vitamin premixes.

Thus, one embodiment of the present invention includes a process of decreasing processing loss of vitamins of a pet food in the form of a coated kibble, such that vitamin retention can be improved. When kibbles, or cores, are extruded with vitamins, vitamin loss can be considered at its peak. Upwards of 30% to 40% of the vitamins added to the core prior to extrusion can be lost during the extrusion process. In some instances, up to 36% of vitamin A can be loss during extrusion, and about 11.2% of vitamin E can be loss during extrusion. However, in one embodiment of the present invention, the core can be extruded as described herein, wherein the core is comprised substantially free of vitamins prior to extrusion. After the core has been extruded in accordance with embodiments of the present invention, sensitive ingredients, such as any of the vitamins disclosed herein, non-limiting examples of which can be vitamin A and vitamin B, can be coated onto the extruded core, using a fluidizing mixer, non-limiting examples which are disclosed herein. The coating can be any of the coatings as described herein. In one embodiment, the coating can comprise vitamin A, vitamin E, a fat component, a palatant component, and any combinations and mixtures thereof. During the coating process, vitamin loss can also be present, however, according to embodiments of the present invention, vitamin loss can be decreased versus when extruding the vitamin. In one embodiment, vitamin loss during coating can be less than 10%. Other embodiments include vitamin processing loss of less than 9%, less than 8%, less than 7%, less than 6%, less than 5%, less than 4%, and less than 3%. In one embodiment, the vitamin loss of vitamin A can be less than 9%. In another embodiment, vitamin loss of vitamin E can be less than 4%.

Additionally, another embodiment of the present invention includes a method, or process, of improving the stability of vitamins during and after storage of a pet food in the form of a coated kibble. Thus, an embodiment of the present invention comprising a coated kibble, wherein the coating comprises a fat component and a binder component, can improve, or increase, the stability of vitamins. In one embodiment, the total retention of vitamin A, after the processing of the kibble and after 16 week storage can be at least 50%. In another embodiment, the total retention of vitamin A can be at least 55%. In another embodiment, the total retention of vitamin A can be at least 60%. In another embodiment, the total retention of vitamin A after processing of the kibble can be at least 61 %.

In another embodiment, the total retention of vitamin A after processing of the kibble can be at least 61%. In another embodiment, the total retention of vitamin A after processing of the kibble can be at least 60%. In another embodiment, the total retention of vitamin A after processing of the kibble can be at least 55%. In another embodiment, the total retention of vitamin A after processing of the kibble can be at least 50%.

One embodiment can include a coating comprising a beadlet homogenized. In this embodiment, the coating can comprise a binder component and a vitamin component. The binder component can be a solution that is homogenized with the vitamin component. The mixture can be homogenized with a high sheer mixer to decrease the particle size of the beadlet in order to better adhere it to the surface of the kibble.

Another embodiment can be a coated beadlet. This embodiment can be made by spraying the binder component solution on the kibbles for about 10 seconds and then adding the vitamin component to the mixer while still spraying the binder solution over an additional 45 seconds.

Another embodiment can be a coating in the form of a powder. This embodiment can be made by adding a water soluble form of the vitamin component to the binder solution and then coating the solution over the kibbles. The powder form can comprise the vitamin component in a starch matrix.

In these embodiments, the vitamin component can be less than 1% of the coated kibble, even less than 0.5%, and even less than 0.2% of the coated kibble. The vitamin component can be a vitamin premix, which can include a carrier. In one embodiment, the vitamin component can be up to 0.3%.

Additionally, as is noted in the Examples that follow, the addition of vitamins in accordance with embodiments of the present invention results in increased animal preference. It is well known in the art that the addition of vitamins to pet food usually results in a decrease in animal preference. However, embodiments of the present invention wherein vitamins are added to a pet food results in an increase in animal preference. Thus, one embodiment of the present invention comprises a coated kibble, wherein the coating comprises vitamins, and wherein the animal preference of the coated kibble is greater than the animal preference of a kibble with vitamins that is not coated in accordance with coating embodiments of the present invention.

When describing the processing of coated kibbles in view of improving vitamin retention and stability, it should be understood that any of the processing steps, methods, and parameters as disclosed anywhere herein can be applied to the process of improving vitamin retention and stability.

## Oxidation

It has been found that the stability, or lack of oxidation, of the coated kibble made in accordance with embodiments of the present invention can be increased. In one embodiment, the layering or coating as disclosed herein of the solids ingredients decreases the amount of fat ingredient of the coating that migrates, or wicks, into the core, which is where catalysts for oxidation can be present. In one embodiment, a non-limiting example of an oxidation catalyst is iron, which can be present in the core. The coating can comprise a protein component, a non-limiting example of which is chicken by-product meal, and a layer of a fat component. The protein component can decrease the amount of fat component that reaches the core and thus can reduce the amount of oxidation that occurs by way of the iron acting as an oxidative catalyst. The total aldehydes is a measure of the aldehydes that are formed in a food product. Aldehydes form as a result of food fatty acids that contain double bonds being converted to aldehydes because of their exposure to oxygen. Thus, less oxidation results in less aldehyde formation, which can mean less rancidity. Additionally, Oxygen Bomb is an approximate measure of length of oxidation absorbing capacity of the antioxidants in a food product. The higher the value, the longer a product is expected to be stable.

Thus, in one embodiment, a coated kibble having less aldehyde formation than other kibbles is disclosed. The coated kibble can have a coating comprising a fat component, a protein component, and a binder component. The coated kibble can have less aldehyde formation than a core without the coating. The coated kibble can have less aldehyde formation than a core having a fat component and/or palatant component, but no protein component.

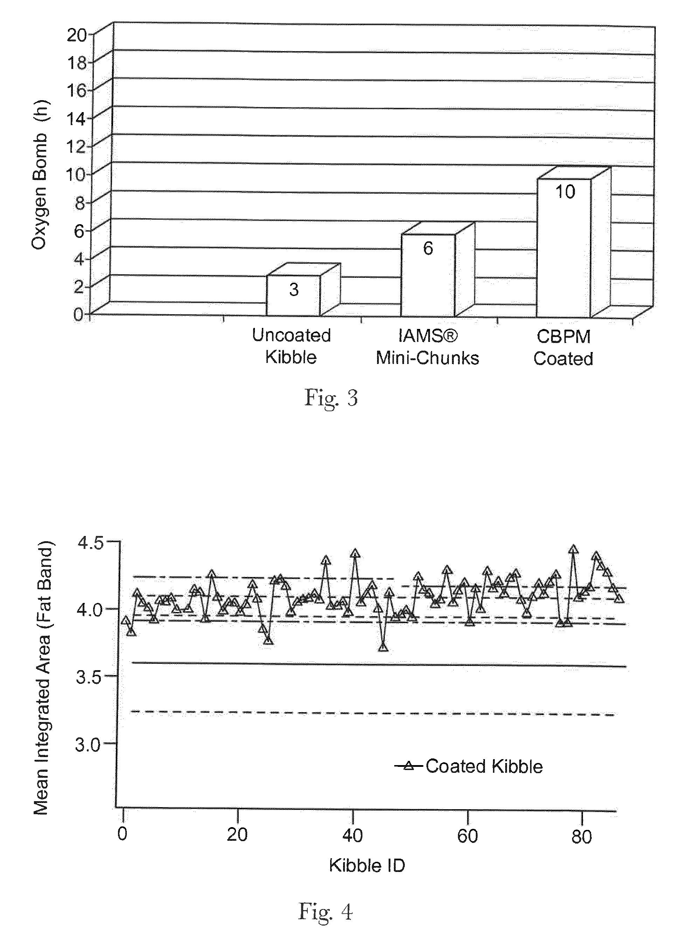

Two comparisons are represented in FIG 2 and FIG 3. Uncoated Iams® Mini-Chunks core kibble can be considered oxidatively unstable as noted by the high Total Aldehydes (TA) level shown in FIG 2. This graph illustrates the product stability benefit provided by mixed tocopherols added through the poultry fat. When Iams® Mini-Chunks current or chicken by-product meal layered kibbles are coated with an amount of fat at 5%, total aldehydes are less than 60 ppm. Comparatively, chicken meal by-product layering does not appear to result in greater total aldehydes than current Iams® Mini-Chunks. As total aldehydes increase in samples, human sensory begins to identify those samples as rancid. The oxygen bomb comparisons are shown in FIG 3. As can be seen, the chicken meal prototype had increased oxygen bomb levels when compared to an uncoated core and an Iams® Mini-Chunks kibble. This result correlates to an increase in stability and thus shelf life of the product.

Thus, FIG 2 and 3 show that embodiments of the present invention, including a coated kibble having coating comprising chicken by-product meal, increases the coated kibbles oxidative stability in that total aldehydes decreases while the oxygen bomb increases.

**Coated Kibble Properties**

As described hereinabove, at least one advantage of the coated kibble in accordance with embodiments of the present invention includes an increase in animal preference, or pet acceptance or preference. Thus, coated kibbles according to embodiments disclosed herein are preferred by pets based on animal preference tests as described herein. Thus, as disclosed in the Examples that follow, an increase in animal preference can be present with coated kibbles in accordance with embodiments of the present invention. It is thought, without being limited by theory, that the increase in animal preference, or pet acceptance, can be explained by the following characteristics of the coated kibble, including mixtures and combinations of these. Thus, it should be understood that coated kibbles in accordance with embodiments of the present invention can include any of the following properties, all of the following properties, and any mixtures and combinations of these properties. Additionally, the coated kibbles can be nutritionally balanced, as described herein.

**Wicking of Fat/Palatant**

In one embodiment, a coated kibble can comprise a core and a coating wherein the coating can comprise a protein component comprising a chicken by-product meal, wherein the chicken by-product meal coating can comprise the outermost coating of the kibble, such that it is exposed to the environment and thus the animal upon eating. In one embodiment of the present invention, the increase in animal preference response (PREF), or animal acceptance or preference, can be correlated to an increase in relative fat level on the kibble surface. Animal preference response, which can be tested using a split plate test response, PREF test, includes ratio percent converted intake or ratio first bite. Without being limited by theory, it is thought that, in one embodiment, the increased animal preference response results because the protein component of the coating, such as those protein components described herein, a non-limiting example of which is chicken by-product meal, that is layered on the core prevents, or decreases, the wicking of fat components and/or palatant components that can also be part of the coating layered onto the kibble. Thus, one embodiment of the present invention relates to a method to prevent, or decrease of the amount of wicking of fat components and/or palatant components from the coating of a kibble into the core of the kibble. Additionally, the decrease or prevention of wicking of fat components and/or palatant components is thought to contribute to the improved animal preference response because more of the fat components and/or palatant components remain on the exposed surface of the kibble. Thus, one embodiment of the present invention relates to a pet food, and a method of providing a pet food, comprising an animal preference enhancing amount of fat on the kibble surface. As used herein, animal preference enhancing amount means an amount that increases the animal preference response, whether ratio percent converted intake or ratio first bite, or both of these. Additionally, while increased amounts of fat components and/or palatant components can be simply added to the exterior of pet foods, those increased amounts would modify the nutritional profile of the pet food, resulting in an unbalanced pet food. Thus, in one embodiment of the present invention, the pet food can be a balanced pet food, such as a coated kibble.

In one non-limiting example of one embodiment of the present invention, as illustrated in FIG 1, a coated kibble 100 comprises a core 101. A first coating 102 can be layered onto core 101 as an inner coating. A second coating 103 can be layered onto first coating 102 and be an outer coating. First coating 102 can comprise a binder component and a solids component, such as a protein component, and combinations and mixtures of these. Non-limiting examples of the binder component can be as described herein and can include whey protein isolate or chicken broth. Non-limiting examples of the solids component can be as described herein and can include chicken by-product meal. Second coating 103 can comprise a fat component and a palatant component, and combinations and mixtures of these. Non-limiting examples of the fat component can be as described herein and can include chicken fat. Non-limiting examples of the palatant can be as described herein and can include chicken liver digest.

Thus, as shown in FIG 1, the first coating 102 can act as a barrier layer to second coating 103 in that first coating 102 reduces the natural migration or wicking of the components of second coating 103 from the outer coating to the inner coating and further into the core. Thus, more of the initial amount of the second coating that was coated onto the kibble remains on the outer coating of the coated kibble. It is thought that since the first coating can comprise solid components, such as chicken by-product meal as disclosed herein, that this solid component keeps the normally moist second coating, which can comprise fat components and/or palatant components, from migration, or wicking, from the outer coating into the inner coating and/or the core of the coated kibble.

It should be understood, however, that the binder component, solids component, fat component, palatant component, and any other components as used herein, can applied, or coated, in any order and using any coating procedure. Thus, the solids component, the binder component, the fat component, and the palatant component can be applied in any order.

Thus, in one embodiment, a coated kibble, a method of providing a coated kibble, and a process for making a coated kibble, comprising a solid barrier layer is disclosed. The solid barrier layer can be applied to a core and can comprise a protein component, which can include chicken by-product meal, and a binder component, in one non-limiting example. The outer layer can then be applied and can comprise a fat component and a palatant component. In one embodiment, the barrier layer of a solids component and a binder component can decrease the migration, or wicking, of the fat component and/or palatant component.

A coated kibble in one embodiment of the present invention can include a decrease in the migration of the fat component and/or palatant components that results in increased fat levels on the surface of the coated kibble when compared with other pet food kibbles. Increased fat levels are described in the Examples that follow and are illustrated in FIGs 4 through 9. Preparations of dog foods corresponding to non-limiting examples of the present invention were analyzed using OPOTEK NIR Imaging, as disclosed in the Methods section herein.

In one embodiment of the present invention comprising a coated kibble comprising a core and a coating as disclosed herein, the integrated fat band, or also called fat band value, as measured by NIR as described herein can be greater than or equal to 4.000. In another embodiment, the integrated fat band can be greater than or equal to 3.900. The integrated fat band for commercial dog food, as described in the Examples that follow, generally is below 3.900 and can be below 3.800 and below 3.700. Additionally, another embodiment relates to a pet food, and a method of providing a pet food, comprising an animal preference enhancing amount of integrated fat band. The integrated fat band can be as described herein. Another embodiment can relate to enhancing the animal preference of pet food by providing a pet food with an integrated fat band as described herein.

Another embodiment of the present invention includes a container of pet food, and providing a container of pet food, wherein the pet food can comprise a plurality of kibbles as disclosed in any embodiment herein, a non-limiting example such as coated kibbles, that on average throughout the container can be nutritionally balanced and can have an integrated fat band, and/or a mean integrated fat band, of greater than or equal to 4.000. In another embodiment, the pet food of a container can on average be nutritionally balanced and can have an integrated fat band, and/or a mean integrated fat band, can be greater than or equal to 3.900. In another embodiment, the container can comprise a pet food comprising a first kibble type with an integrated fat band, and/or a mean integrated fat band, greater than or equal to 3.900 or 4.000 and a second kibble type with a an integrated fat band, and/or a mean integrated fat band, outside of the integrated fat band, and/or a mean integrated fat band, of the first kibble type. The container can be any container, such as package as is well known in the art. In one embodiment, the container can substantially be filled with coated kibbles in accordance with embodiments of the present invention. Other embodiments include a mixture of embodiments of the present invention and pet food not in accordance with embodiments of the present invention, such as standard, or commercially available, pet food, such as Iams® Mini-Chunks. Other embodiments include one type of kibble as disclosed in embodiments described herein and a second type of kibble as disclosed in other embodiments as described herein.

As described herein, the integrated fat band can increase the animal preference response, whether ratio percent converted intake or ratio first bite, or both of these. For example, Example 3 hereinafter shows just two non-limiting examples of the present invention, namely a first prototype of a chicken by-product meal layered kibble made by enrobing a formula re-balanced Iams® Mini-Chunks core kibble with 10% chicken by-product meal and 5% chicken broth (20% chicken broth solution), all by weight of the kibble, with a palatant system of 1% chicken liver digest and 2% chicken viscera digest added along with 5% fat, and second prototype made similarly to the first prototype with the exception that it utilized a different binder, 5% whey protein isolate (20% whey protein isolate solution), and did not include any chicken viscera digest. As shown in Table 3, with Test 1 for the first prototype and Test 2 for the second prototype, the percent converted intake and the first bite are both at ratios consistent with an increase of animal preference response. Specifically for the first prototype, a percent converted intake ratio of 16.5:1 and an infinite first bite were present. Specifically for the second prototype, a percent converted intake ratio of 16.2:1 and 31:1 first bite were present. Thus, a mean fat band at levels described herein can be present and is evidenced by these increase animal preference responses.

Aroma

Layering of a protein component, or any of the other components as described herein, as a coating on a core, as described herein, can also alter the aroma profile of a coated kibble and result in a coated kibble having different aroma profiles than typical pet food. Certain embodiments of coated kibbles as disclosed herein may contain specific compounds and components that can give the pet food desirable aromas. These compounds and components can cause changes in the aroma profile, or aroma attribute changes, which can result in improved animal preference, or animal acceptance or preference, using embodiments of a coated kibble as disclosed herein. Without being bound by theory, it is thought that these aroma attribute changes contribute to the improved preference results as detailed herein, and as shown in Tables 1, 2, and 3, of a coated kibble wherein the coating comprises a protein component, a non-limiting example such as chicken by-product meal, layered onto a kibble core. Previous consumer research has suggested that human-like aromas on pet food could be perceived as improvements in products. Examples hereinafter help to describe and show the changes in aroma profile or character that accompany non-limiting examples of embodiments of the present invention.

Thus, one non-limiting example of an embodiment of the present invention relates to a coated kibble, and a method of delivering a coated kibble, having an aroma profile, an analyte concentration, and an aroma correlation, wherein the aroma correlation relates the aroma profile comprising an analyte concentration to the increase in animal preference. Additionally, another embodiment relates to a coated kibble having an aroma profile, an analyte concentration, and thus an aroma correlation. With these embodiments, animal preference (PREF) response data, or animal acceptance or preference, can be correlated with the aroma profile and analyte concentration, as disclosed herein. Thus, in one embodiment, aroma analyte profiles and concentrations can correlate to positive, or increased, animal preference response data. Additionally, in one embodiment, the coated kibble comprises an animal preference enhancing amount of an analyte. The animal preference enhancing amount of the analyte can be within the coating, within the core, and combinations and mixtures of these. In another embodiment, a method of enhancing the animal preference of a pet food comprises delivering an animal preference enhancing amount of an analyte in a pet food is disclosed. As used herein, animal preference enhancing amount means an amount that increases the animal preference response, whether ratio percent converted intake or ratio first bite, or both of these.

The aroma profile, including analyte concentration, can be determined in accordance with the method as disclosed hereinafter, using Solid Phase MicroExtraction Gas Chromatography/Mass Spectrometry (SPME-GC-MS) to analyze pet food samples for compounds associated with the aroma. The area under the curve was measured as the SPME analysis number or count.

One embodiment of the present invention relates to a coated kibble and a method of delivery thereof wherein the coated kibble has a particular aroma profile. A non-limiting example of a coated kibble comprises a core comprising a carbohydrate source, a protein source, a fat source, and other ingredients, all as disclosed herein, and a coating comprising a protein component, a binder component, a palatant component, a fat component, and other components. In this embodiment, an aroma profile of the coated kibble can be generated and analyzed showing specific analyte concentrations the aroma. Concentrations can be determined for each of the analytes. The concentration of the analytes can then be correlated with PREF response data that was gathered for each of the embodiments to show an aroma correlation with the PREF response data. Thus, in one embodiment, an increase in particular analytes present in the aroma can drive up, or increase the PREF response data, meaning a greater PREF response, resulting in higher animal preference or acceptance.

In one embodiment, the analytes 2-Piperidione, 2,3 pentanedione, 2-ethyl-3,5-dimethypyrazine, Furfural, Sulfurol, Indole, and mixtures and combinations of these, can be elevated or representative of families with elevated levels when compared to off the shelf pet food. Thus, in one embodiment, a coated kibble comprising particular concentrations of the analytes 2-Piperidione, 2,3 pentanedione, 2-ethyl-3,5-dimethypyrazine, Furfural, Sulfurol, Indole, and mixtures and combinations of these, increases PREF response. Thus, an animal preference enhancing amount of the analytes 2-Piperidione, 2,3 pentanedione, 2-ethyl-3,5-dimethypyrazine, Furfural, Sulfurol, Indole, and mixtures and combinations of these, can be present in one embodiment of the coated kibble. This animal preference enhancing amount of the analytes can increase the PREF response. In one embodiment, the Ratio Percent Converted Intake (PCI) can increase with an animal preference enhancing amount of the analytes 2-Piperidione, 2,3 pentanedione, 2-ethyl-3,5-dimethypyrazine, Furfural, Sulfurol, Indole, and mixtures and combinations of these. In another embodiment, the Ratio First Bite can increase with an animal preference enhancing amount of the analytes 2-Piperidione, 2,3 pentanedione, 2-ethyl-3,5-dimethypyrazine, Furfural, Sulfurol, Indole, and mixtures and combinations of these.

Thus, one embodiment of the present invention relates to a coated kibble comprising an enriched amount, or an animal preference enhancing amount, of the analytes 2-Piperidione, 2,3 pentanedione, 2-ethyl-3,5-dimethypyrazine, Furfural, Sulfurol, Indole, and mixtures and combinations of these. Another embodiment includes a method of delivering a coated kibble comprising an animal preference enhancing amount of the analytes 2-Piperidione, 2,3 pentanedione, 2-ethyl-3,5-dimethypyrazine, Furfural, Sulfurol, Indole, and mixtures and combinations of these.

**EP 3 120 709 A1**

Another embodiment of the present invention relates to a method of enhancing the animal preference of a pet food comprising delivering an animal preference enhancing amount of an analyte in a pet food. The method can include providing a pet food, as disclosed herein, wherein the pet food comprises enriched amount, or an animal preference enhancing amount, of the analytes 2-Piperidione, 2,3 pentanedione, 2-ethyl-3,5-dimethypyrazine, Furfural, Sulfurol, Indole, and mixtures and combinations of these. The method can also comprise adding to pet food animal preference enhancing amounts of the analytes 2-Piperidione, 2,3 pentanedione, 2-ethyl-3,5-dimethypyrazine, Furfural, Sulfurol, Indole, and mixtures and combinations of these.

In one embodiment, the analyte 2-Piperidione can have a SPME analysis number of greater than 1,500,000, or less than 10,000,000, or between 1,500,00 and 10,000,000, and all integer values less than, greater than, and therebetween those values. In one embodiment, the analyte 2,3 pentanedione can have a SPME analysis number of greater than 65,000, or less than 500,000, or between 65,000 and 500,000, and all integer values less than, greater than, and therebetween those values. In one embodiment, the analyte 2-ethyl-3,5-dimethypyrazine can have a SPME analysis number of greater than 310,000, or less than 1,000,000, or between 310,000 and 1,000,000, and all integer values less than, greater than, and therebetween those values. In one embodiment, the analyte Furfural can have a SPME analysis number of greater than 2,300,000, or less than 7,000,000, or between 2,300,000 and 7,000,000, and all values less than, greater than, and therebetween those values. In one embodiment, the analyte Sulfurol can have a SPME analysis number of greater than 150,000, or less than 1,000,000, or between 150,000 and 1,000,000, and all values less than, greater than, and therebetween those values. In one embodiment, the analyte Indole can have a SPME analysis number of greater than 176,000, or less than 2,000,000, or between 176,000 and 2,000,000, and all values less than, greater than, and therebetween those values. In another embodiment, the coated kibble can comprise mixtures and combinations of these analyte SPME analysis numbers, including just one of these.

As described herein, an animal preference enhancing amount of these analytes, either alone or in a combination or mixture, can increase the animal preference response, whether ratio percent converted intake or ratio first bite, or both of these. For example, Example 3 hereinafter shows just two non-limiting examples of the present invention, namely a first prototype of a chicken by-product meal layered kibble made by enrobing a formula re-balanced Iams® Mini-Chunks core kibble with 10% chicken by-product meal and 5% chicken broth (20% chicken broth solution), all by weight of the kibble, with a palatant system of 1% chicken liver digest and 2% chicken viscera digest added along with 5% fat, and second prototype made similarly to the first prototype with the exception that it utilized a different binder, 5% whey protein isolate (20% whey protein isolate solution), and did not include any chicken viscera digest. As shown in Table 3, with Test 1 for the first prototype and Test 2 for the second prototype, the percent converted intake and the first bite are both at ratios consistent with an increase of animal preference response. Specifically for the first prototype, a percent converted intake ratio of 16.5:1 and an infinite first bite were present. Specifically for the second prototype, a percent converted intake ratio of 16.2:1 and 31:1 first bite were present. Thus, an animal preference enhancing amount of one, all, or a mixture or combination of the analytes can be present and is evidenced by these increase animal preference responses.

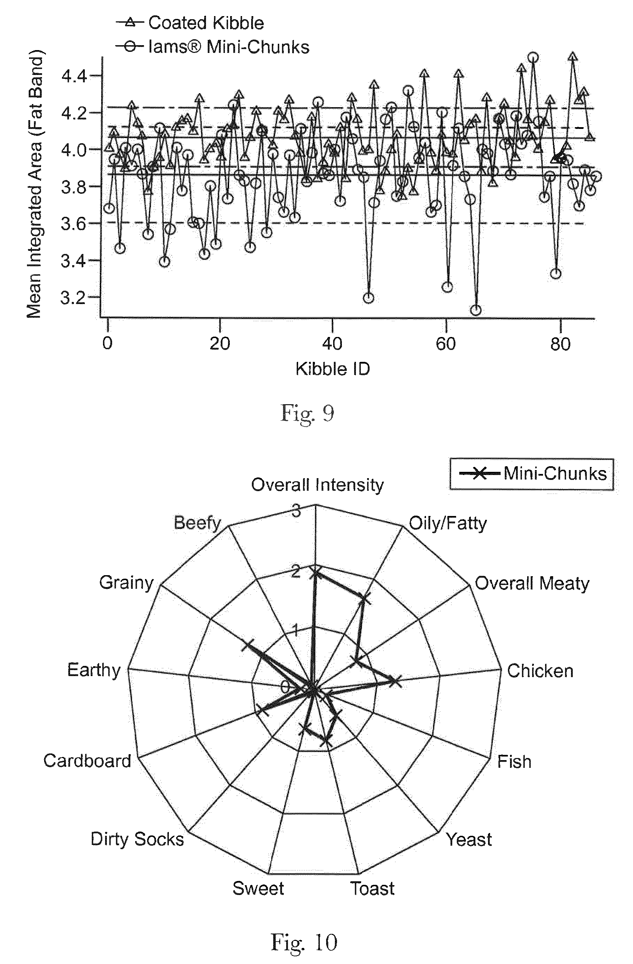

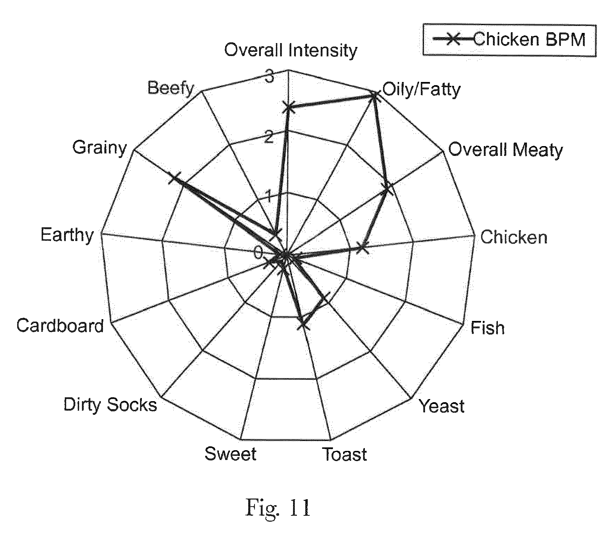

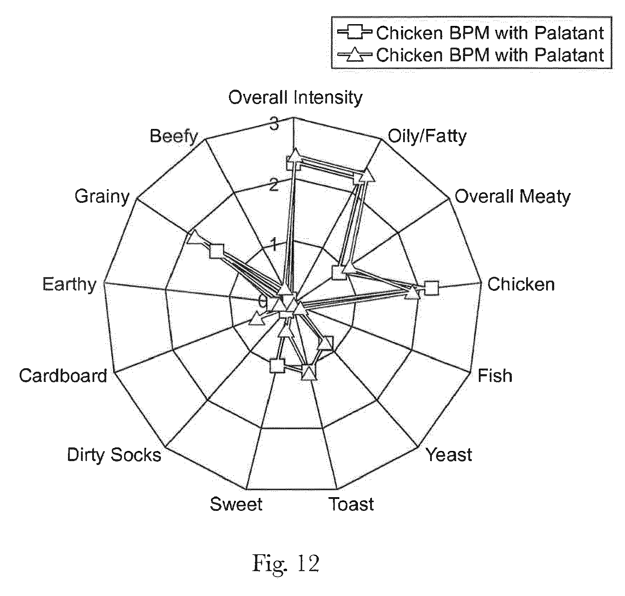

Additionally, and as described hereinafter in Example 4 and as shown in FIGs 10 through 12, consumer data illustrates aroma profile differences between non-limiting embodiments of the present invention and commercial pet food that is not enriched with the aroma analytes as described herein. FIG 10 shows the panel's aroma characterization for Iams® Mini-Chunks. As can be seen, Mini-Chunks is reduced in Overall Intensity, Yeast, and Dirty Socks aroma character. FIG 11 shows the chicken by-product meal protein layering prototype of Example 2 with no additional palatant. The chicken by-product meal protein layering prototype results in increased Oily/Fatty and Overall Meaty character. FIG 12 shows the chicken by-product meal layering prototypes with the addition of palatant(s) of Example 3, Tests 1 and 2. The chicken by-product meal protein layering prototype results in increased Oily/Fatty character but had a similar Overall Meaty character. Chicken character was also elevated for the chicken by-product meal layering prototype with additional palatant.

Additionally, consumer research has suggested that certain aromas on pet food could be perceived as improvements in pet food products, such as kibbles, from a human perspective. Thus, non-limiting examples of embodiments of the present invention provide an aroma profile that provides certain increased and decreased aroma attributes perceived by humans. Aroma attributes can include the following: overall intensity, oily/fatty, overall meaty, chicken, fish, yeast, toast, sweet, dirty socks, cardboard, earthy, grainy, and beefy. In some embodiments it can be desired that certain of these aroma attributes are at increased, or higher, levels while certain of these attributes are at decreased, or lower, levels. Thus, in one embodiment of the present invention, a pet food in accordance with any of the embodiments described herein is provided such that an aroma profile is provided by the pet food that is perceptible to humans, wherein the aroma profile can be described using human sensory aroma attributes. Embodiments of the human sensory attributes include elevated levels of oily/fatty aroma, elevated levels of overall intensity, elevated levels of overall meaty aroma, decreased levels of cardboard aroma, decrease levels of dirty socks aroma, and combinations and mixtures of these.

Examples

Example 1 - Animal Preference

Test#1: Kenneled dogs were tested using the following kibbles. A kibbled dog food was made as a test kibble prototype using the core of Iams® Mini-Chunks. The core was coated with a layer of 0.5% chicken liver digest, 2% fat, 10% chicken by-product meal, and 5% chicken broth (as a binder, 20% chicken broth solution), all by weight of the kibble. A control prototype was made using the core of Iams® Mini-Chunks and coating with 0.5% chicken liver digest and 2% fat, all by weight of the kibble.

Test #2: In-home pet dogs were tested using the following kibbles. A test kibble prototype was made using the core of Iams® Mini-Chunks. The core was coated with a layer of 0.5% chicken liver digest, 2% fat, 10% chicken by-product meal, 5% chicken broth (as a binder, 20% chicken broth solution), all by weight of the kibble, and was coated with a 0.13% vitamin pre-mix to determine whether externally coating vitamins on a core having a protein layer would negatively impact animal preference of the kibble. A control prototype was made using Iams® Mini-Chunks as a core and coated with 0.5% chicken liver digest and 2% fat, all by weight of the kibble.

Both tests included a salmonella inactivation step of adding 4% moisture, or water, to the chicken by-product meal layer then drying the product for three minutes at 260°F.

Test #1 resulted in the chicken by-product meal layered prototype being overwhelming preferred by dogs (41:1 total volume; 50:1 Percent Converted Intake (PCI); See Table 1 below). Moreover, over 98% of the total food consumed during the two day split plate test was the chicken by-product meal layered prototype. Test #2 resulted in the chicken by-product meal layered prototype being preferred by in-home dogs (4.5:1 total volume; 4.4:1 PCI). To put these results into perspective, before dogs (or cats) are allowed to be on an animal preference panel, they undergo qualifying PREF tests. One of the qualifying tests typically is an obvious choice (known positive control versus a known negative control). The positive control typically is made with the normal commercial palatant, such as chicken liver digest, coated onto it. The negative control is made without a palatant. A previous "obvious choice" test with the kenneled dogs resulted in 16:1 total volume; 14:1 PCI. A previous "obvious choice" test with in home dogs resulted in a 2.2:1 total volume; 2.4:1 PCI. In neither case, kenneled or in home pets, did the obvious choice test result in as strong of a preference as occurred with the chicken by-product meal layered prototypes.

Table 1. Summary Results of Preference Tests Compared to Reference Tests

|  | Test 1 | Test 2 | Reference Test 1 | Reference Test 2 |
|---|---|---|---|---|
| Results | Test (Chicken by-product meal Layered Prototype) vs. Control | Test (Chicken by-product meal Layered Prototype) vs. Control | Test (Kenneled Dogs Obvious choice - with Palatant) vs. Control | Test (In Home Pets Obvious choice - with Palatant) vs. Control |
| Total Volume (g/Day) | 41.4:1* | 4.5:1* | 15.6:1* | 2.2:1** |
| Percent Converted Food Intake (%/Animal/Day) | 49.6:1* | 4.4:1* | 13.5:1* | 2.4:1** |
| First Bite | $\infty^1$ | 7.25:1 | 4.4:1 | 3:1 |
| Preference Segmentation[2] | 16/0/0 | 18/7/1 | 15/0/0 | 18/7/3 |
| *P<0.02 <br> **P<0.05 <br> [1]$\infty$ = infinity; No dogs ate the Control prototype first so the divisor was zero. <br> [2]Preference Segmentation = number of dogs preferring Test prototype/ number of dogs showing no preference/ number of dogs preferring Control prototype | | | | |

Example 2 - Animal Preference

A chicken by-product meal layered kibble prototype was made by layering, or enrobing, the core of Iams® Mini-Chunks with 10% chicken by-product meal and 5% chicken broth (20% chicken broth solution), all by weight of the kibble. No palatant was added. A 5% coating of fat, by weight of the kibble, was also added. This prototype was compared with Iams® Mini-Chunks and Purina ONE® (Total Nutrition Chicken and Rice) in split plate, or animal preference, tests. All split plate tests were conducted by standard methods using kenneled dogs. A salmonella inactivation step of adding 4% moisture, or water, to the chicken by-product meal layer then drying the product for three minutes at 260°F was performed.

The layered prototype was preferred (P<0.05) over Iams Mini-Chunks (8:1 Percent Converted Intake (PCI); See Table 2). The layered prototype was also preferred (P<0.05) over Purina ONE® (3:1 PCI).

Table 2. Summary Results of Preference Tests Compared to Reference Tests

| Results | Test (Chicken by-product meal Layered Prototype) vs. Iams® MiniChunks | Test (Chicken by-product meal Layered Prototype) vs. Purina ONE® |
|---|---|---|
| Total Volume (g/Day) | 7,1:1* | 4.9:1** |
| Percent Converted Food Intake (%/Animal/Day) | 8.2:1* | 3.3:1* |
| First Bite | 1.7:1 | 2.9:1 |
| Preference Segmentation[1] | 14/2/0 | 12/3/1 |
| *P<0.05 <br> **P<0.10 <br> [1]Preference Segmentation = number of dogs preferring Test prototype/ number of dogs showing no preference/ number of dogs preferring Control prototype | | |

Example 3 - Animal Preference

A chicken by-product meal layered kibble first prototype was made by enrobing a formula re-balanced Iams® Mini-Chunks core kibble with 10% chicken by-product meal and 5% chicken broth (20% chicken broth solution), all by weight of the kibble, in a 32-liter pilot Bella mixer. A palatant system of 1% chicken liver digest and 2% chicken viscera digest was added as an additional coating to this prototype along with 5% fat, by weight of the kibble. In sum, this prototype was reformulated to have similar nutrient composition as Iams® Mini-Chunks. A second prototype was made similarly to this one with the exception that it used a different binder, 5% whey protein isolate (20% whey protein isolate solution), and did not include any chicken viscera digest. These prototypes were compared to Purina ONE® (Total Nutrition Chicken & Rice) in preference tests. Another comparison included comparing a third prototype, which is the first prototype of 10% chicken by-product meal layering using chicken broth as a binder on an Iams® Mini-Chunks extruded core but not rebalanced, to Iams® Mini-Chunks. Also included was this same third prototype without including the chicken by-product meal and again comparing to Iams® Mini-Chunks. All preference tests were two days in length and performed with standard methods using kenneled dogs (n=16). The process of making the prototypes with a layer of chicken by-product meal included a salmonella inactivation step of adding 4% moisture, or water, to the chicken by-product meal layer then drying the product for three min at 260°F.

The chicken by-product meal layered re-balanced Iams® Mini-Chunks prototypes (using broth or whey protein isolate) were substantially preferred (P<0.05) over Purina ONE® (17:1 and 16:1 Percent Converted Intake (PCI); See Table 3). The chicken by-product meal layered prototype (not re-balanced) using broth as a binder was also preferred (P<0.05) over Iams Mini-Chunks (8:1 PCI), whereas broth alone (no chicken by-product meal) did not result in as great of an animal preference boost (2:1, P<0.10). At least three primary conclusions can be drawn: 1) 10% chicken by-product meal layering in combination with the existing animal preference system overwhelmingly beat Purina ONE®, 2) the positive impact of 10% chicken by-product meal layering is maintained as the product is re-balanced for protein (i.e., the level of protein is reduced in the core kibble) and 3) the impact of 10% chicken by-product meal layering is independent of the influence of the binder on animal preference.

Table 3. Summary Results of Preference Tests Compared to Reference Tests

| Results | Test 1 | Test 2 | Test 3 | Test 4 |
|---|---|---|---|---|
| | 10% Chicken by-product meal Layered Re-Balanced Iams Mini-Chunks - broth binder vs. Purina ONE® | 10% Chicken by-product meal Layered Re-Balanced Iams Mini-Chunks - whey protein isolate binder vs. Purina ONE® | 10% Chicken by-product meal Layered Iams Mini-Chunks (not rebalanced) - broth binder vs. Iams Mini-Chunks | Iams Mini-Chunks (not rebalanced) - broth binder only vs. Iams Mini-Chunks |
| Total Volume (g/Day) | 16.6:1* | 15.1:1* | 7.1:1** | 2.4.1:1*** |
| Percent Converted Food Intake (%/Animal/Day) | 16.5:1** | 16.2:1** | 8.2:1** | 2.3:1**** |
| First Bite | $\infty^1$ | 31:1 | 1.7:1 | 1.1:1 |
| Preference Segmentation[2] | 16/0/0 | 16/0/0 | 14/2/0 | 9/4/3 |

*P<0.02
**P<0.05
***NS (P>0.10)
****P<0.10
[1]$\infty$ = infinity; No dogs ate the Control prototype first so the divisor was zero.
[2]Preference Segmentation = number of dogs preferring Test prototype/number of dogs showing no preference/number of dogs preferring Control prototype

Example 4 - Human Sensory

A human sensory descriptive panel of nine was used to assess aroma attributes of dog food. The dog food was evaluated for aroma using 13 descriptive attributes and rated on a 0 to 8 point scale.

FIG 10 shows the panel's aroma characterization for Iams® Mini-Chunks. As can be seen, Mini-Chunks is reduced in Overall Intensity, Yeast, and Dirty Socks aroma character. FIG 11 shows the chicken by-product meal protein layering prototype of Example 2 with no additional palatant. The chicken by-product meal protein layering prototype results in increased Oily/Fatty and Overall Meaty character versus other off the shelf dog kibble foods. FIG 12 shows chicken by-product meal layering prototypes with the addition of palatant(s) of Example 3, Tests 1 and 2. The chicken by-product meal protein layering prototype results in increased Oily/Fatty character but had a similar Overall Meaty character versus other off the shelf dog kibble foods. Chicken character was also elevated for the chicken by-product meal layering prototype with additional palatant.

Example 5 - Process

About 6000 g of core kibbles of an extruded and dried mixture of ground corn, chicken by-product meal, minerals, vitamins, amino acids, fish oil, water, and beet pulp are introduced into a paddle mixer in a hopper located above the paddle mixer. The mixer is a model FZM-0.7 Forberg fluidized zone mixer manufactured by Eirich Machines, Inc., Gurnee, Ill., USA. The binder component is composed of about 70 grams of whey protein isolate (Fonterra NMZP) mixed with about 300 grams of warm (60°C) water to make a solution. Once the kibbles have been added to the mixer, the paddles are rotated to fluidize the kibbles. The paddles are rotated at about 84 RPM and a Froude number of about 0.95. The whey protein solution is pumped to the spray valve over the fluidized zone in the center of the mixer using Cole-Parmer model 07550-30 peristaltic pump using a parallel Masterflex L/S Easyload II pump head. The whey protein solution is sprayed over the fluidized zone of the mixer over a period of about 60 seconds. About 750 grams of chicken by-product meal as a protein component is split into two 375 gram portions, and each portion is added in separate corners down the sides of the mixer over period of about 60 second simultaneously with the whey protein addition. A coated kibble is then formed. The doors at the bottom of the mixer are opened to dump the coated kibbles into a metal receiver. The coated kibbles are then dried in an air impingement oven at about 140°C for about 2 minutes. Visual examination of the kibbles shows that the mixture has been substantially evenly coated over the surface of the kibbles to form a solid layer. Slicing several of the kibbles in half confirms that the distribution of the coating around the surface of the individual kibbles is substantially even. During the operation of the mixer in this example, the Froude number was about 0.95, the dimensionless flux was about 0.000262, and the convective cycle time was about 10 seconds.

Example 6 - Process/Salmonella

A 200-liter (7 cu. ft.) double axle fluidizing mixer manufactured by Eirich Machines, Inc., model FZM 7 is used in this example. Steam is connected to two ports on opposite corners of FZM 7 mixer. A hot air blower is connected to the mixer to blow in hot air into the top of the mixer. About 60 kg of dry (about 7.5% moisture, or water) pet food cores, or core pellets, are added to the mixer. In a separate container, about 600 grams of whey protein isolate (Fonterra NMZP) binder is mixed with about 2400 grams of warm (60°C) water to make a binder solution. Four containers are each filled with about 1.5 kg of chicken by-product meal (6 kg chicken by-product meal total) as protein. The chicken by-product meal tests positive for salmonella. This binder solution is transferred to a pressure canister, and a spray nozzle line is connected between the canister and the spray valve that is centered over the fluidized zone of the mixer. Two spray nozzles, each having a flat spray profile with an angle of about 45 degrees, are present. The two nozzles are positioned over the center of the fluidized zone along the axis of the paddles, one about half way between one side wall and the center of the mixer, and the second about half way between the center and the opposite side of the mixer. The mixer is preheated with hot air to about 60°C. The mixer is started at about 55 RPM. The canister containing the binder is pressurized to about 30 psi, and binder spray is initiated into the mixer. At the same time the four containers each holding about 1.5 kg of chicken by-product meal are added to the mixer at four different points: two containers are added at opposite corners of the mixer, and two containers are added at the center of the mixer, on opposite sides. The binder and the chicken by-product meal are added to the mixer over a period of about 45 seconds. After the completion of the addition of the binder and the chicken by-product meal, while the mixer is still rotating, hot air (about 200°C) is then blown into the top of the mixer at about 40 CFM. Once the hot air starts blowing into the mixer, about 15 psig steam at a rate of about 2 kg/min is injected into the mixer through two steam nozzles on opposite sides of the mixer for about one minute. The combination to hot air and steam in the mixer results in a hot air stream of about 95% relative humidity. At the end of one minute, the steam is stopped but the hot air is continued for an additional four minutes. During this period, the relative humidity inside the mixer drops, and, as it drops, moisture, or water, is removed from the surface of the kibble. At the end of the two minutes of hot air, doors at the bottom of the mixer are opened the kibbles are dropped into a container. Visual examination of the kibbles shows that the mixture has been substantially evenly coated over the surface of the kibbles to form a solid layer. Slicing several of the kibbles in half confirms that the distribution of the coating around the surface of the individual kibbles is substantially even. During the operation of the mixer in this example, the Froude number was about 0.95, the dimensionless flux was about 0.000261, and the convective cycle time was about eight seconds. These are substantially the same conditions of Froude number, dimensionless flux, and convective cycle time as for the in Example 5. Since the finished product was substantially the same in the larger mixer as in the smaller mixer under the same scale up conditions, the scale up criteria can be considered validated. A test for salmonella on the finished coated kibbles is negative.

Example 7 - Vitamin Stability

To demonstrate the improved vitamin retention by way of a coating applied using a fluidized mixer, a comparison between the process loss and the loss in storage of coated vitamins versus extruded vitamins can be analyzed. To compare the process loss, current Iams® Mini-chunks were extruded with and without vitamins. The product with vitamins was enrobed with a coating of 5% poultry fat mixed with 1.6% chicken livers digest and 0.14% vitamin premix. The product without vitamins was enrobed on a fluidizing mixer with a 5% poultry fat coating and a 1.6% chicken livers digest palatant coating. Samples of all the inputs and outputs of the process were collected and analyzed for vitamin A and vitamin E.

Based on the mass balance around the fluidizing mixer, the coating process had 8.2% vitamin A loss and 3.3% vitamin E loss. The extruder reduced vitamin A by 36% and reduced vitamin E by 11.2%. See Table 4.

Table 4. Process Loss of Vitamin A and E in Coating and Extrusion

| Nutrient | % Loss in Coating | % Loss in Extruder |
|---|---|---|
| Vitamin A | 8.2 | 36.0 |
| Vitamin E | 3.3 | 11.2 |

To compare the loss in storage, vitamin coated products and extruded vitamin products were bagged and sealed into 13 multi-wall paper bags. The bags were stored in accelerated conditions (100°F and 50% relative humidity) and ambient conditions (70°F and 25% relative humidity). Two more prototypes were evaluated in the storage stability testing including one as Iams® Mini-Chunks with one layer of Paramount B from Loders Croklaan (partially hydrogenated palm kernel oil) and a second layer of vitamins, fat, and palatant, and the second as Iams® Mini-Chunks with 5% chicken broth and 10% chicken byproduct meal mixed with vitamins as the coating. The two products were sealed and stored in both accelerated and ambient conditions as above.

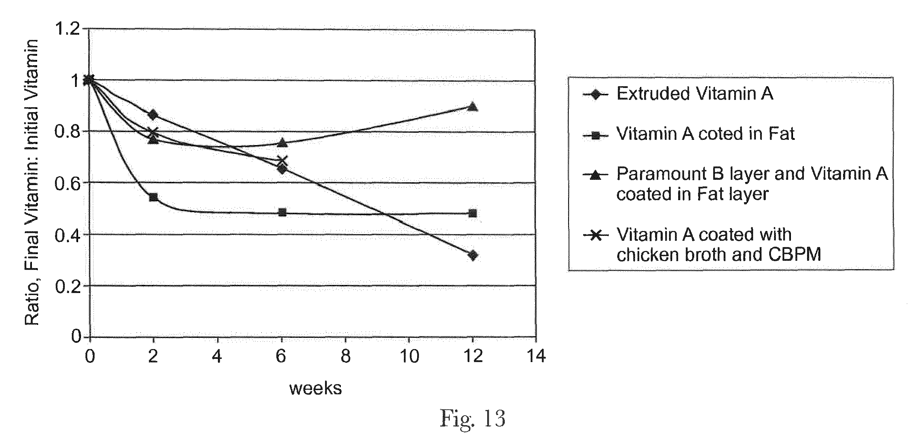

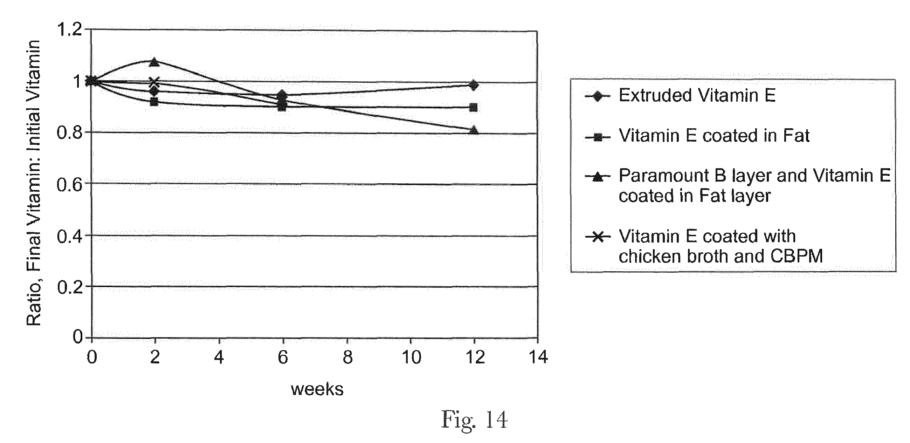

The products held in storage were sampled and analyzed for vitamin A and E. The results were normalized because the level at time zero was not consistent for all the products. FIGs 13 and 14 show the results. FIG 13 shows the time in weeks on the x-axis and the ratio of the final vitamin amount to the initial vitamin amount on the y-axis. Overall, the vitamin coatings maintained greater vitamin A stability than the extruded vitamin control. The vitamins in the chicken fat showed a large drop in vitamin A levels after the first two weeks but rapidly became stable. It was hypothesized and later verified with benchtop testing that the chicken fat does not have the binding capability to adhere the rice hulls in the vitamin premix because the particle size is too large. This issue can be resolved using a stronger binder, which is demonstrated by the improved vitamin A stability using Paramount B and chicken broth as binders.

Example 7A - Vitamin A Stability

Four additional kibbles were compared. The coated kibbles compared all used a rebalanced Iams® Mini-Chunks core. The four coatings were: 1) beadlet homogenized, which is a kibble coated with a whey protein isolated solution homogenized with vitamin A crosslinked with a gelatin (the standard crosslinked form of vitamin A from BASF and DSM). The mixture was homogenized with a high sheer mixer to decrease the particle size of the beadlet in order to better adhere it to the surface of the kibble. 2) Coated beadlet, which is a kibble coated by spraying whey protein isolate solution on the kibbles for 10 seconds, then adding the crosslinked vitamin A dry to the mixer while still spraying the binder solution over an additional 45 seconds. 3) Powder A, which is a kibble coated by adding a water soluble form of vitamin A to the whey protein isolate solution then coating the solution over the kibbles. The powder form is vitamin A in a starch matrix. 4) An extruded kibble with vitamin A mixed with the core prior to extrusion. All of the kibbles used vitamins that were coated at 0.13% by weight of the formula.

The result of the process loss and storage loss of Vitamin A are shown in Table 5. The storage loss procedure performed was that as described in Example 7.

Table 5. Process and Storage Loss of Vitamin A

|  | % Loss In Process | % Loss in Storage | % Total Loss | % Total Retention |
|---|---|---|---|---|
| Extruded Vitamin A in Premix | 37 | 72 | 60 | 40 |
| Beadlet Homogen in WPI | 28 | 35 | 43 | 57 |
| Beadlet coated with WPI | 5 | 49 | 39 | 61 |
| Powder A with WPI | 11 | 65 | 45 | 55 |

Example 8 - Fat Distribution

Preparations of dog foods were analyzed using OPOTEK NIR Imaging, as disclosed in more detail in the Methods section herein The preparations were analyzed and compared with each other as follows.

FIG 4 shows a coated kibble. The coated kibble has a rebalanced Iams® Mini-Chunks core and a coating of 10% chicken by-product meal, 1% chicken broth, 1% chicken liver digest, 2% chicken viscera digest, and 5.0% chicken fat. Results for NIR spectral images depict integrated area of the fat band giving a relative indication of surface fat level. Overlays of the histograms (not shown) from reference kibbles show good agreement. The overlay for field kibbles histogram (not shown) shows a large difference between the distributions. The graph of mean integrated area of fat band for each field kibble as shown in FIG 4 shows that the two samples have means that differ by approximately the sum of their standard deviations. The Wilcoxon test shows that, within 95% confidence limit, the hypothesis that the distribution of mean kibble values (for integrated area of fat band) are identical should be rejected (P two tail < 0.05). The mean fat band value for the coated kibble was 4.08.

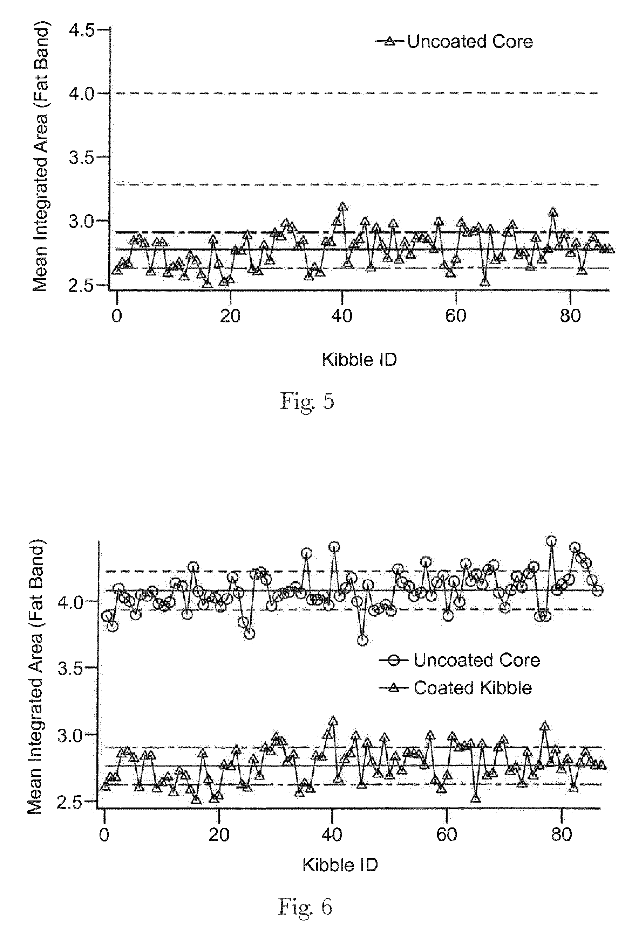

FIG 5 shows a rebalanced Iams® Mini-Chunks core. Results for NIR spectral images depict integrated area of the fat band giving a relative indication of surface fat level. Overlays of the histograms from reference kibbles (not shown) show good agreement. The overlay for field kibbles histogram (not shown) shows a large difference between the distributions. The graph of mean integrated area of fat band for each field kibble as shown in FIG 5 shows that the two samples have means that differ by more than the sum of their standard deviations. The Wilcoxon test shows that, within 95% confidence limit, the hypothesis that the distribution of mean kibble values (for integrated area of fat band) are identical should be rejected (P two tail < 0.05). The mean fat band value for the core was 2.77.

FIG 6 shows a comparison between a rebalanced Iams® Mini-Chunks core and a coated kibble. The coated kibble has a rebalanced Iams® Mini-Chunks core and a coating of 10% chicken by-product meal, 1% chicken broth, 1% chicken liver digest, 2% chicken viscera digest, and 5.0% chicken fat. Results for NIR spectral images depict integrated area of the fat band giving a relative indication of surface fat level. Overlays of the histograms from reference kibbles (not shown) show good agreement. The overlay for field kibbles histogram (not shown) shows a large difference between the distributions. The graph of mean integrated area of fat band for each field kibble as shown in FIG 6 shows that the two samples have means that differ by more than the sum of their standard deviations. The Wilcoxon test shows that, within 95% confidence limit, the hypothesis that the distribution of mean kibble values (for integrated area of fat band) are identical should be rejected (P two tail < 0.05). The mean fat band value for the core, as above, was 2.77. The mean fat band value for the coated kibble, as above, was 4.08.

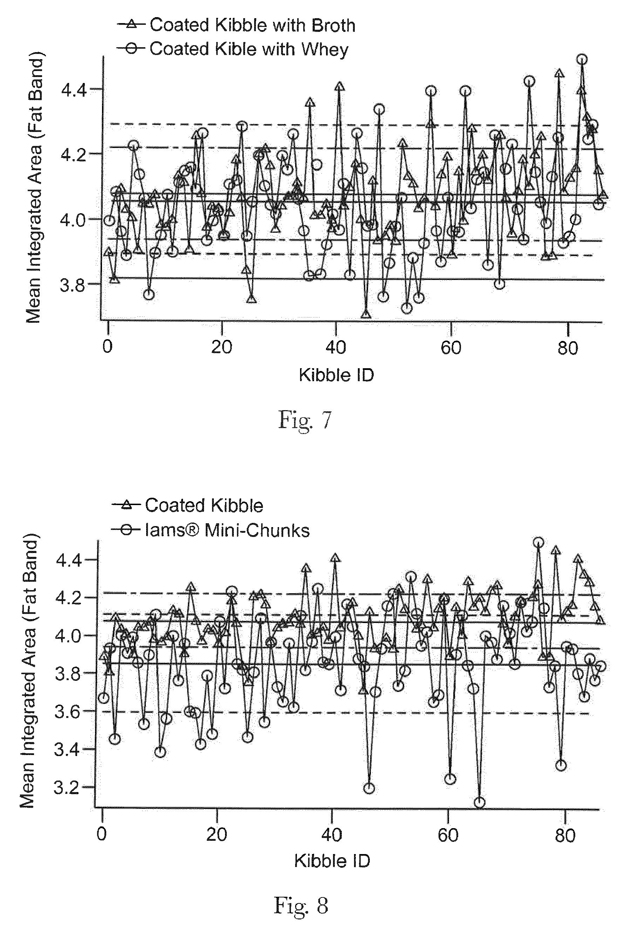

FIG 7 shows a comparison between two different coated kibbles. The first coated kibble has a rebalanced Iams® Mini-Chunks core and a coating of 10% chicken by-product meal, 1% chicken broth, 1% chicken liver digest, 2% chicken viscera digest, and 5.0% chicken fat. The second coated kibble has a rebalanced Iams® Mini-Chunks core and a coating of 10% chicken by-product meal, 1% whey protein isolate, 1% chicken liver digest, 2% chicken viscera digest, and 5.0% chicken fat. Results for NIR spectral images depict integrated area of the fat band giving a relative indication of surface fat level. Overlays of the histograms from reference kibbles (not shown) show good agreement. The overlay for field kibbles histogram (not shown) shows that the distributions are similar. The graph of mean integrated area of fat band for each field kibble as shown in FIG 7 shows that the two samples have similar means and standard deviations. The Wilcoxon test shows that, within 95% confidence limit, the hypothesis that the distribution of mean kibble values (for integrated area of fat band) are identical can not be rejected (P two tail > 0.05). The mean fat band value for the first coated kibble was, as above, 4.08. The mean fat band value for the second coated kibble was 4.06.

FIG 8 shows a comparison between a coated kibble and Iams® Mini-Chunks. The coated kibble has a rebalanced Iams® Mini-Chunks core and a coating of 10% chicken by-product meal, 1% chicken broth, 1% chicken liver digest, 2% chicken viscera digest, and 5.0% chicken fat. Results for NIR spectral images depict integrated area of the fat band giving a relative indication of surface fat level. Overlays of the histograms from reference kibbles (not shown) show good agreement. The overlay for field kibbles histogram (not shown) shows a large difference between the distributions. The graph of mean integrated area of fat band for each field kibble as shown in FIG 8 shows that the two samples have means that differ by approximately one standard deviation. The Wilcoxon test shows that, within 95% confidence limit, the hypothesis that the distribution of mean kibble values (for integrated area of fat band) are identical should be rejected (P two tail < 0.05).

FIG 9 shows a comparison between a coated kibble and Iams® Mini-Chunks. The coated kibble has a rebalanced Iams® Mini-Chunks core and a coating of 10% chicken by-product meal, 1% whey protein isolate, 1% chicken liver digest, 2% chicken viscera digest, and 5.0% chicken fat. Results for NIR spectral images depict integrated area of the fat band giving a relative indication of surface fat level. Overlays of the histograms from reference kibbles show good agreement. The overlay for field kibbles histogram (not shown) shows a large difference between the distributions. The graph of mean integrated area of fat band for each field kibble as shown in FIG 9 shows that the two samples have means that differ by approximately one standard deviation. The Wilcoxon test shows that, within 95% confidence limit, the hypothesis that the distribution of mean kibble values (for integrated area of fat band) are identical should be rejected (P two tail < 0.05).

Example 9 - Aroma Analysis

In this Example, 19 studies of different kibble prototypes were conducted analyzing the aroma of a coated kibble. This method uses Solid Phase MicroExtraction Gas Chromatography/Mass Spectrometry (SPME-GC-MS) to analyze pet food samples for compounds associated with aroma (as described hereinafter). Additionally, the degree of correlation between the SPME data and the animal preference (PREF) was studied to determine which formula components correlate to the highest, or best, PREF.

The 39 SPME analytes were grouped into one of 19 aromatic compound families along with the corresponding correlation with Split Plate analysis of Ratio Percent Converted Intake and First Bite. The SPME results from the current Iams® Mini-Chunks and the first prototype and second prototype of Example 3 were then compared to identify analytes that differed in the lead Test Prototypes. Results indicate that the analytes 2-Piperidione, 2,3 pentanedione, 2-ethyl-3,5-dimethypyrazine, Furfural, Sulfurol, and Indole were all elevated or representative of families with elevated levels compared to current Iams Mini Chunks. These compounds also were significantly (P < 0.01) correlated ($R^2 > 0.60$) with improved animal preference response by dogs, as shown in Table 6.

Table 6. Aromatic Compounds and Dog Preference

| Aromatic Compound | Correlation | P-Value |
|---|---|---|
| 2-Piperidinone | 0.72 | 0.00055342 |
| 2,3-pentanedione | 0.76 | 0.00010555 |
| 2-ethyl-3,5-dimethylpyrazine | 0.70 | 0.00052086 |
| Furfural | 0.68 | 0.00097682 |
| Sulfurol | 0.69 | 0.00082698 |
| Indole | 0.62 | 0.00356432 |

Methods

NIR Imaging

Preparations of dog foods were analyzed using an OPOTEK HySPEC™ near-infrared (NIR) imaging system. Hyperspectral NIR reflectance image stacks were collected, resulting in a series of images that, when taken as a set, provide NIR spectral data at each pixel. The HySPEC™ employs a pulsed, narrow-bandwidth laser light source and a thermoelectrically cooled, extended-range, InGaAs focal-plane array (FPA) detector. The laser produces pulses 5 ns in duration at a 10-Hz repetition rate. The detector consists of 320 x 256 elements that are 30 $\mu$m x 30 $\mu$m in size. The combined imaging system can scan the visible wavelength range from 430 to 690 nm and the NIR wavelength range from 900 to 1650 nm (11,000 to 6,000 cm-1). Bandwidth is less than 0.5 nm in the visible and less than 1.5 nm at 1650 nm. Spatial resolution is approximately 660 x 660 $\mu$m2/pixel, and the field of view is approximately 21 cm x 17 cm.

A collection of in-tact kibbles (typically 70 to 100 in number) was exposed to the diffused, fiber-coupled laser output, and the InGaAs FPA was temporally gated to capture the reflected laser light from each individual pulse. Images were recorded at approximately 2 nm intervals between 900 and 1650 nm; five repeated images were taken at each wavelength and averaged. Instrument software automatically corrects each image for dark current, illumination uniformity, and spectral response of the lens/detector. Compensation for variation in illumination intensity across the field of view was performed by imaging a Spectralon plate with 99% reflectivity across the spectral range; Spectralon data was used to normalize sample data sets. Non-linear response of the detector and pulse-to-pulse variation in intensity of the laser source were addressed by means of four Spectralon disks (nominal reflectivities 2%, 40%, 60%, and 99%), located near the four corners of the field of view. Three entire hyperspectral image stacks were collected for each sample, and samples were not moved between data collections, with all data collections in immediate succession. These three data sets were averaged to obtain the final data set used to determine "fat band" values.

For analysis, the reflectance image stacks were converted into pseudo-absorbance spectral image stacks by taking the logarithm of the inverse of reflectance values. Single images the contrast of which is related to fat distribution were created by integrating the hyperspectral data (along the wavelength axis) at each pixel from 1155 nm to 1242 nm, capturing a peak corresponding to the second overtone of carbon-hydrogen stretching vibrations. Specifically, the "fat band" value at each pixel was determined by integrating the area under the spectral curve and above a straight line connecting the pseudo absorbance values at 1155 nm and 1242 nm. Imaging masks were used to ensure that only pixels corresponding to kibbles in the FOV were included in statistics relating to the "fat band." Values for integrated area have not been calibrated to absolute fat level, though increasing integrated area is indicative of increasing presence of fat. A fixed set of kibbles with nominal 1% fat coating and 13% fat coating were prepared and were present in all recorded images as an added confirmation of run-to-run consistency in "fat band" calculation.

Salmonella Detection

Detecting whether salmonella has been sufficiently deactivated can be performed by many methods, one of which can be the following. A BAX System PCR assay is used with automated detection, and the following steps are performed.

The sample is prepared by weighing 25 grams of the sample to be tested into a sterile container. Add 225 ml of sterile buffered peptone water (BPW) to the sample. Incubate the sample at 35-37°C for at least 16 hours. Next, prepare a 1:50 dilution by transferring 10 $\mu$l of the sample to a cluster tube containing 500 $\mu$l of Brain Heart Infusion (BHI). Incubate the tube at 35-37°C for three hours. Then, warm up the heating blocks. Record the order samples are prepared on sample tracking sheet, in addition to the BAX system Kit Lot Number. Enter sample IDs into the BAX System's software, following instructions in user guide. Click on the run full process icon to initiate thermocycler. After the three-hour incubation period in BHI, transfer 5μl of the re-grown samples to cluster tubes containing 200μl of lysis reagent (150μl into 12ml lysis buffer). Heat lysis tubes 20 minutes at 37°C. Heat lysis tubes 10 minutes at 95 °C. Cool lysis tubes 5 minutes in lysate cooling block assembly. Arrange the appropriate number of PCR tubes in a PCR tube holder on the cooling block assembly. Loosen the caps with the decapping tool but leave in place until ready to hydrate the tablets. Transfer 50μl of lysate to PCR tubes. Cap tubes with flat optical caps in order to detect fluorescent signal. Take the entire cooling block to the thermocycler/detector. Follow the screen prompts as to when the thermocycler/detector is ready to be loaded. Open the door to the thermocycler/detector, slide the drawer out, place the PCR tubes into the heating block (making sure the tubes are seated in the wells securely), shut the drawer, lower the door, and then click NEXT. The thermocycler amplifies DNA, generating a fluorescent signal, which is automatically analyzed to determine results.

The results are provided next. When the thermocycler/detector is complete, the screen prompts to open the door, remove the samples, close the door, and then click NEXT. Click the FINISH button to review the results. The screen displays a window with a modified rack view, showing different colors in the wells, with a symbol in the center to illustrate the results. Green (-) symbolizes a negative for target organism (salmonella), a red (+) symbolizes a positive for target organism (salmonella), and a Yellow with a (?) symbolizes an indeterminate result. The graphs for negative results should be viewed to check for the large control peak around 75-80. The graphs for positive results should be interpreted using Qualicon's basis for interpretation. If a Yellow (?) result arises, retest from (?) sample lysate and BHI sample lysate. Follow steps above to complete test.

Split Plate Test

This protocol describes the methodology and standard operating procedure for conduction of normal canine split plate testing, including ratio percent converted intake and ratio first bite.

All diets fed must receive a "negative" result for Salmonella as described in the salmonella method section herein. Once diets have passed microbial testing successfully, conduction of the testing can begin. Diets for split plate tests are kept in Rubbermaid® brand storage bins that are labeled with the corresponding color coded label for each diet. Split plate test food bowls are filled the day before the test begins and then stored overnight in the corresponding Rubbermaid® brand diet bin. If they cannot fit in the bin with the diet, they are placed in an additional bin that has also been properly labeled with the correct color/patterned label. Split plate tests are fed at the beginning of the day, such as at 7:00am.

The food carts are loaded each morning with the bowls being placed in kennel chronological order. Upon entering the kennel area, the technician picks up any feces from during the night and completes a visual check of each animal. After this initial animal check of the day, feeding begins. A clipboard containing the working copy, the attribute sheet, and any other essential information, has previously been placed on the cart. First choice information is then collected. The technician opens the kennel door, bowls in hand, and encourages the dog to a neutral, or centered, position. The bowls are held in front of the dog briefly, to ensure use of olfactory, and then placed in the bowl rings. The door is closed quietly, and the technician steps back and waits until the animal makes the first choice. The choice is noted with a circle on the sheet, and the technician progresses through the kennel, repeating the above actions for every panel member.

The bowls remain with the animals for one hour, or until either one bowl is completely consumed, or 50% of each bowl is consumed. The bowls are collected, returned to the kitchen, and weighed back. The amount remaining, or "ORTs", is recorded in the correct diet column by each individual panel members' name. After being weighed back, the bowls are placed in the cagewasher rack and mechanically processed to ensure effective sanitation.

Any aberrant behavior is recorded. Any out of the ordinary events such as renovations, special collections, healthcare surveillance blood-draws, etc., are also recorded there. Any of these are immediately brought to the attention of the viewer. If any animals are ill, exhibit loose stools, vomiting, or need intercession, notification is done.

Generally, diet one is the test diet; diet two is the control diet. ORTs, as mentioned above, means the amount of food left after the feeding is completed.

Typical split plate data that is recorded can include ratio percent converted intake and ratio first bite. As used herein, ratio percent converted intake is the ratio of the food consumed of diet one versus diet two. For example, if dogs are fed diet one and diet two, and 60 grams of diet one is consumed while 40 grams of diet two is consumed, the ratio percent converted intake would be 60g:40g, or 1.5:1. As used herein, the ratio first bite is the ratio of the first food that an animal takes a bite of. For example, if ten dogs are presented with diet one and diet two, and seven dogs take a first bite of diet one, and three dogs take a first bite of diet two, then the ratio first bite is 7:3, or 2.33:1.

Aroma Test Human Sensory

This protocol describes the methodology for sensory evaluation to be used by sensory scientists. The method employs the human nose of panelists (human instruments) to evaluate aroma. First, an Odor Sensory Acuity test is administered to potential panelists for qualification as a panelist. The Odor Sensory Acuity test comprises two parts. The first part is odor identification. Ten samples are provided to a potential panelist. The potential panelist sniffs the samples and then identifies each aroma of the samples from a list of aromas given to him/her. The second part is the same different test. Ten pairs of samples are presented to the potential panelist. The potential panelist sniffs each pair of samples and determines if they are the same aroma or a different aroma. Different aromas can include different by character, for example, caramel versus cherry, and different by intensity, for example, low peppermint concentration versus high peppermint concentration. A panelist is deemed a qualified panelist if they achieve 75% or greater in correct identifications of the two parts of this Odor Sensory Acuity test, cumulative.

The qualified panelists based on the Odor Sensory Acuity test are then utilized for descriptive analysis of diet aroma, using ingredients, reference standards, and finished product samples. Panelists rate products for various attributes using a 0 to 8 point scale, as follows.

Samples are prepared by placing 90 - 100 grams of each test product (coated kibbles) in glass jars with Teflon lids for sample evaluations. Panelists then sample one sample at a time and evaluate all samples in a set. Evaluation by the panelist comprises the following:

1) Panelist unscrews the lid from its jar;
2) Panelist takes three deep quick sniffs and then removes the sample from the nose.
3) Panelist makes assessment using a 0 to 8 point scale and records assessment.
4) Panelist breathes clean air for at least 20 seconds between samples.

Assessments by the panelists are performed according to the following sensory attribute aroma definitions. Additionally, the following aroma references are given to aid the panelist in assessing the sample on the 0 to 8 point scale.

Sensory Attribute Aroma Definitions:

Oily/Fatty: Intensity of oily; includes greasy, cooking oil, peanut oil, olive oil and fatty (poultry fat).
Chicken: Intensity of chicken aroma: includes chicken by-product meal, chicken soup, chicken by-product meal roasted chicken.
Fish: Intensity of fish aroma; includes fish meal, wet cat food (ocean fish and tuna), fish oil.
Yeast: Intensity of Yeast aroma-more specifically brewers yeast.
Toasted: Intensity of toasted aroma; includes roasted nuts or coffee and nutty, lightly toasted to more toasted.
Sweet: Intensity of sweet aroma; includes candy, caramel-like, toffee like, butterscotch, "sugar babies", floral.
Dirty Socks: Intensity of Dirty socks smell- includes musty.
Cardboard: Intensity of cardboard or corrugated paper.
Earthy: Intensity of earth/fresh dirt like aroma.
Grainy: Intensity of grain like, oats, cereal smell or corn
Beefy: Intensity of beef smell-includes IAMS® brand wet, savory sauce beef, and IAMS® brand dog chunks (beef).
Overall Intensity: Intensity of overall aroma of any kind, ranging from mild, faint, light or weak, to strong, heavy, or pungent.

Aroma References:

| Oily/Fatty | Chicken |
|---|---|
| Vegetable Oil - 1 Olive Oil - 7 | Diluted chicken broth - 2.5 Chicken Broth - 4 Chicken Stock - 6 |

| Meaty | Fish |
|---|---|
| IAMS® Ground Dog Beef/Rice - 1<br>IAMS® Beef Stew - 4 | IAMS® Original Chicken - 1<br>IAMS® Original Fish - 2<br>Tuna - 8 |

| Yeast | Toasted |
|---|---|
| Dry yeast - 1<br>Wet yeast - 8 | Toast - 1<br>Espresso ground coffee - 6<br>Burnt toast - 7 |

| Sweet | Dirty Socks |
|---|---|
| Karo® syrup - 2<br>Sugar Babies - 7.5 | Musty Rag - 7 |

| Cardboard | Earthy |
|---|---|
| Paper from dog/cat food bag - 1<br>Corrugated cardboard - 2<br>Wet corrugated cardboard - 6 | Dirt - 7 |

| Grainy aroma | Beefy |
|---|---|
| IAMS® ground Savory Dinner w/meaty beef and rice - 1<br><br>IAMS® Original chicken - 3 | Diluted beef broth - 1<br>Dried beef - 2<br>Beef broth - 7<br>Roast beef - 7-8 |

| Overall Intensity | |
|---|---|
| Pedigree® Chunks (wet) - 2<br>Purina® Mighty Dog® (wet) - 3<br>Beneful® Original Dry - 7 | |

Aroma Analysis

This method uses Solid Phase MicroExtraction Gas Chromatography/Mass Spectrometry (SPME-GC-MS) to analyze pet food samples for compounds associated with aroma of the pet food. The following procedure was used to analyze the headspace volatiles above a pet food sample. The kibble product was weighed to 2.0g (+/- 0.05g) into a SPME headspace vial (22 mL with septum cap) and the vial capped. Duplicates of each sample to be analyzed were prepared. The samples were placed into an autosampler tray of a Gerstel MPS 2 autosampler (Gerstel, Inc. Linthicom, MD, USA). The samples are heated to 75°C for 10 minutes (equilibration time) and then sampled with a 2 cm Carb/DVB/PDMS SPME fiber (Supelco, Bellefonte, PA, USA) at 75°C for 10 min. The SPME fiber is then desorbed into the GC inlet (250°C) of an Agilent 6890GC-5973 MS for 8 min. The GC is equipped with a Restek Stabilwax column 30 m x 0.25 mm x 0.25 $\mu$m film. The GC temperature is initially 50°C and held at this temperature for 1 minutes, then ramped at 15°C/min to 240°C and held for 4 minutes. The chromatogram is measured against standard retention times/target ions using Chemstation software, with the peaks corresponding to specific compounds collected using extracted ion chromatograms (EIC). The area under the curve was then measured to give a SPME analysis number or count.

A statistical pair-wise correlation was made between the aromatic compounds and two outcome variables from the preference test (Ratio Percent Converted Intake and First Bite). Then the headspace aromatic compounds of Iams® Mini-Chunks, and the first prototype and second prototype of Example 3 were compared. Those aromatic compounds that were 1) significantly correlated with preference and 2) elevated compared to Mini-Chunks were identified as most likely responsible for improved dog preference.

Vitamin Amounts

The following supplies are used:

| Supplies | Part Number | Vendor |
|---|---|---|
| Retinol | 95144 | Fluka |
| Reagent Alcohol | 9401-02 | VWR |
| Potassium Hydroxide (45%) | 3143-01 | VWR |
| Ethoxyquin | IC15796380 | VWR |
| $\alpha$-Tocopherol | 95240 | Fluka |
| Glacial Acetic Acid | 9511-02*BC | VWR |
| 4.6 x 100 mm Onyx | OOF-4097-EO | Phenomenex |
| L-Ascorbic Acid | A-7506 | Sigma |
| Acetonitrile, Optima grade | A996-4 | Fisher Scientific |
| BHT, $\geq$99.0% | B1378-100G | Siqma-Aldrich |

Using top-loading balance, weigh 70.0X g (where X is any number) of the sample into a 250 ml glass jar with a screw-on lid with Teflon® lining. Add 140.0X g of deionized water, screw the lid onto the container, and mix the content well. Place container into a water bath for 2 hours at 50°C. Remove container from the water bath.

Using Retsch Grindomix GM 200 Knife Mill, pulverize the content of the glass jar in two steps of 25 seconds at 10000 rpm. Collect 100-150 g into a plastic sample cup for further analysis.

Using analytical balance, weigh between 3 and 3.3 g of the resulted mix into a 20 ml amber vial recording the weight to nearest 4 decimal places. Add 0.25-0.3 g ascorbic acid. Place magnetic bar inside the vial. Add 10 ml of reagent alcohol, and then 5 ml of 45% w/w potassium hydroxide solution. Cap the vial and vortex the content. Record the weight of the vial and place it on the hot block with magnetic stirrer. Keep the sample on the hot block for 1 hour at 110°C. Remove the vial and place it in a refrigerator to cool to or below room temperature. Record the weight of the vial after saponification. Difference between initial and final weights should be within 2% or sample must be redigested.

Place autosampler vials into a rack, and add 0.5 mL of 60:40 Reagent Alcohol:Acetic Acid with ~100 ppm of Ethoxyquin. Place into the freezer for at least 30 minutes. In the hood, uncap the vials, remove 0.5 mL of the saponificated sample, and place it into the chilled autosampler vials. Cap autosampler vials and shake vigorously. Place onto HPLC, which will give concentration of vitamin in extract, $\mu$g/mL. The Vitamin A peak should be found at close to 5 minutes, and the Vitamin E peak should be found at close to 12 minutes.

Create standards as follows:

Retinol stock standard: Into a 250 mL actinic volumetric flask, weigh roughly 200 mg BHT and 100 mg of Retinol, record value to 4 places. Dilute to the line in methanol and mix.

$\alpha$-Tocopherol stock standard: Into a 250 mL, actinic volumetric flask, weigh roughly 200 mg BHT and 100 mg of $\alpha$-Tocopherol, record value to 4 places. Add about 200 mL of methanol, and shake, making sure all the tocopherol has dissolved. Dilute to the line and mix.

Calculate the concentration of each standard in $\mu$g/mL, and place in refrigerator. When protected from light, these stock solutions can be kept for 2 months.

Standard 1: Into a 10 mL volumetric, add 100 $\mu$L of retinol stock standard and 1mL of $\alpha$-tocopherol stock standard. Dilute to the line with methanol.

Standard 2: Into a 10 mL volumetric, add 1mL of the Standard 1. Dilute to the line with methanol and mix.

Standard 3: Into a 10 mL volumetric, add 1mL of the Standard 2. Dilute to the line with methanol and mix.

Run a calibration curve for new column or more frequently if needed. Run a control sample at least once daily at the beginning of the batch.

HPLC Conditions: Column Heater: 30° C; Injection Volume: 50μL

Solvent Gradient:

| Time | % Water | % Acetonitrile | Flow (ml/mi n) | Max. Press. |
|---|---|---|---|---|
| 0 | 35 | 65 | 0.5 | 200 |
| 0.01 | 35 | 65 | 2.5 | 200 |
| 7 | 30 | 70 | 2.5 | 200 |
| 9 | 0 | 100 | 2.5 | 200 |
| 13 | 0 | 100 | 2.5 | 200 |
| 14 | 35 | 65 | 2.5 | 200 |
| 14.01 | 35 | 65 | 0.5 | 200 |

Column: 4.6x100mm Onyx Monolithic C18.
Guard column: 4.6x5 mm Onyx Monolithic C18.
Detection: UV/Vis Diode Array or equivalent, at 324nm and 290nm.
Retention: The Vitamin A peak should be found at close to 5 minutes, and the Vitamin E peak should be found at close to 12 minutes.

Calibration and HPLC Operation. Calibration should be done for each new column with fresh standards. Validity of a calibration curve is checked with control samples.

Vitamins results are reported in units of IU/kg as follows:

$$Vita\min A = \frac{C*V*DF*1000}{W*0.3};$$

$$Vita\min E = \frac{C*V*DF*1.1}{W},$$

where

C - concentration of vitamin in extract, μg/mL (from the HPLC)
V - total volume of extraction solvents (reagent alcohol and potassium hydroxide), mL
DF - dilution factor (compensates addition of neutralization solution)
W - sample aliquot weight, g

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

The present invention can also be characterized by the following items:

1. A pet food comprising an animal preference enhancing amount of a fat band.

2. The pet food of item 1 and wherein the fat band has a value greater than or equal to 3.900 or 4.000.

3. The pet food of any of the preceding items and wherein the pet food comprises a nutritionally balanced kibble.

4. The pet food of any of the preceding items and wherein the kibble comprises a first coating.

5. The pet food of any of the preceding items and wherein the kibble comprises a second coating.

6. The pet food of any of the preceding items and wherein the first coating comprises a solids component and the second coating comprises a fat component.

7. The pet food of any of the preceding items and wherein the pet food comprises an extruded core having a water content less than 12%; from 0.1% to 75% coating, the coating coated on the extruded core to form a coated kibble; wherein the coating comprises a protein component at from 50% to 99% of the coating and a binder component at from 1% to 50% of the coating; wherein the coated kibble comprises less than 12% water content.

8. The pet food of any of the preceding items and wherein the coated kibble is nutritionally balanced.

9. The pet food of any of the preceding items and wherein the coating comprises the protein component at less than 12% moisture content.

10. The pet food of any of the preceding items and wherein the core comprises a gelatinized starch matrix.

11. The pet food of any of the preceding items and wherein the protein component comprises a meal selected from the group consisting of chicken meal, chicken by-product meal, lamb meal, turkey meal, fish meal, soybean meal, corn gluten meal, and combinations and mixtures thereof.

12. The pet food of any of the preceding items and wherein the coating comprises 65% to 75% chicken by-product meal.

13. The pet food of any of the preceding items and wherein the binder component is selected from the group consisting of high lactose whey by-product, egg white, whey protein isolate, chicken broth, and combinations and mixtures thereof.

14. A container of pet food, wherein the pet food comprises a plurality of kibbles according to any of the preceding items.

15. A container of pet food wherein the pet food comprises a first kibble type and a second kibble type, wherein the first kibble type comprises a kibble according to any of the preceding items, wherein the second kibble type comprises a kibble having a mean fat band outside of the level of any of the preceding items.

## Claims

1. A pet food, wherein the pet food comprises an
   extruded core having a water content less than 12%;
   from 0.1 % to 75% coating, the coating coated on the extruded core to form a coated kibble;
   wherein the coating comprises a protein component at from 50% to 99% of the coating and a binder component at from 1% to 50% of the coating;
   wherein the coated kibble comprises less than 12% water content,
   wherein:

(a) the coating comprises: a meal selected from the group consisting of chicken meal, chicken by-product meal, lamb meal, turkey meal, fish meal, soybean meal, corn gluten meal, and combinations and mixtures thereof; high lactose whey by-product or egg white; and chicken fat; or

(b) the binder component is selected from the group consisting of high lactose whey by-product, egg white, whey protein isolate, chicken broth, and combinations and mixtures thereof; or

(c) the coating comprises 65% to 75% chicken by-product meal, 5% to 10% high lactose whey by-product or egg white, and 15% to 25% chicken fat.

2. The pet food of any one of the preceding claims, wherein the coated kibble is nutritionally balanced.

3. The pet food of any one of the preceding claims, wherein the coating comprises the protein component at less than 12% moisture content.

4. The pet food of any one of the preceding claims, wherein the core comprises a gelatinized starch matrix.

5. The pet food of any one of the preceding claims, wherein the protein component comprises a meal selected from the group consisting of chicken meal, chicken by-product meal, lamb meal, turkey meal, fish meal, soybean meal, corn gluten meal, and combinations and mixtures thereof.

6. The pet food of any one of the preceding claims, wherein the coating comprises 65% to 75% chicken by-product meal.

7. The pet food of any one of the preceding claims, wherein the binder component is selected from the group consisting of high lactose whey by-product, egg white, whey protein isolate, chicken broth, and combinations and mixtures thereof.

8. The pet food of any one of the preceding claims, wherein the coating comprises 65% to 75% chicken by-product meal, 5% to 10% high lactose whey by-product or egg white, and 15% to 25% chicken fat.

9. A container of pet food, wherein the pet food comprises a plurality of kibbles according to any one of the preceding claims.

Fig. 1

Fig. 2

Fig. 3

Fig. 4

Fig. 5

Fig. 6

Fig. 7

Fig. 8

Fig. 9

Fig. 10

Fig. 11

Chicken BPM with Palatant
Chicken BPM with Palatant

Overall Intensity

Beefy

Oily/Fatty

Grainy

Overall Meaty

Earthy

Chicken

Cardboard

Fish

Dirty Socks

Yeast

Sweet

Toast

Fig. 12

Fig. 13

Fig. 14

Europäisches
Patentamt

European
Patent Office

Office européen
des brevets

# EUROPEAN SEARCH REPORT

Application Number

EP 16 18 3927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 229 485 A (BROWN BRUCE W ET AL) 21 October 1980 (1980-10-21) * column 1, line 12 - line 29; claim 7; examples 6-10 * * column 4, lines 52-64 * * column 5, last paragraph * * column 6, lines 23-50 * ----- | 1-9 | INV. A23K10/20 A23K10/30 A23K40/30 A23K20/10 A23K50/42 A23K20/174 A23K20/147 |
| X | US 3 808 341 A (RONGEY E ET AL) 30 April 1974 (1974-04-30) * column 1, line 31 - line 58; examples V, XII * ----- | 1-9 | |
| X | US 2006/062892 A1 (MERRICK TYLER W [US]) 23 March 2006 (2006-03-23) * paragraphs [0007], [0008], [0011]; examples 1,3 * ----- | 1-9 | |
| A | US 2005/106285 A1 (LEE YANIEN [US] ET AL) 19 May 2005 (2005-05-19) * paragraphs [0018] - [0021], [0033] - [0045], [0048] - [0051] * ----- | 1-9 | TECHNICAL FIELDS SEARCHED (IPC) A23K A23L |
| A | US 2006/260537 A1 (BRENT JOHN L JR [US]) 23 November 2006 (2006-11-23) * paragraph [0040] * ----- | 1 | |

The present search report has been drawn up for all claims

| Place of search | Date of completion of the search | Examiner |
|---|---|---|
| Munich | 23 November 2016 | Rinaldi, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 3927

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2016

| Patent document cited in search report | | Publication date | Patent family member(s) | | Publication date |
|---|---|---|---|---|---|
| US 4229485 | A | 21-10-1980 | AU | 524808 B2 | 07-10-1982 |
| | | | AU | 4108078 A | 01-05-1980 |
| | | | GB | 2028092 A | 05-03-1980 |
| | | | JP | S5519089 A | 09-02-1980 |
| | | | US | 4229485 A | 21-10-1980 |
| US 3808341 | A | 30-04-1974 | AT | 341318 B | 10-02-1978 |
| | | | AU | 466500 B2 | 30-10-1975 |
| | | | AU | 4886472 A | 16-05-1974 |
| | | | BE | 790990 A1 | 01-03-1973 |
| | | | CA | 982868 A | 03-02-1976 |
| | | | CH | 566115 A5 | 15-09-1975 |
| | | | DE | 2256008 A1 | 17-05-1973 |
| | | | DK | 143884 B | 26-10-1981 |
| | | | FR | 2160438 A1 | 29-06-1973 |
| | | | GB | 1407435 A | 24-09-1975 |
| | | | IE | 36823 B1 | 02-03-1977 |
| | | | IT | 970380 B | 10-04-1974 |
| | | | JP | S588823 B2 | 17-02-1983 |
| | | | JP | S4872357 A | 29-09-1973 |
| | | | JP | S5678565 A | 27-06-1981 |
| | | | LU | 66466 A1 | 01-02-1973 |
| | | | NL | 7215473 A | 17-05-1973 |
| | | | NO | 136634 B | 04-07-1977 |
| | | | US | 3808341 A | 30-04-1974 |
| US 2006062892 | A1 | 23-03-2006 | US | 2006062892 A1 | 23-03-2006 |
| | | | WO | 2006036361 A2 | 06-04-2006 |
| US 2005106285 | A1 | 19-05-2005 | NONE | | |
| US 2006260537 | A1 | 23-11-2006 | AR | 053474 A1 | 09-05-2007 |
| | | | AU | 2006250054 A1 | 30-11-2006 |
| | | | BR | PI0610386 A2 | 15-06-2010 |
| | | | CA | 2607395 A1 | 30-11-2006 |
| | | | CN | 101198258 A | 11-06-2008 |
| | | | EP | 1885201 A1 | 13-02-2008 |
| | | | JP | 2008539799 A | 20-11-2008 |
| | | | US | 2006260537 A1 | 23-11-2006 |
| | | | WO | 2006127743 A1 | 30-11-2006 |

EPO FORM P0459

For more details about this annex : see Official Journal of the European Patent Office, No. 12/82

## REFERENCES CITED IN THE DESCRIPTION

**Patent documents cited in the description**

- WO 03075676 A
- US 20060228448 A1
- US 20050152884 A1
- US 20050158294 A1
- US 20050158293 A1
- US 20050175598 A1
- US 20060269534 A1
- US 20060270020 A1
- WO 2005060707A2 A
- RU 2251364